# EUROPEAN PATENT SPECIFICATION

(11) **EP 4 160 952 B1**
(45) Date of publication and mention of the grant of the patent: **25.03.2026**
(21) Application number: 21833258.3
(22) Date of filing: 23.06.2021
(51) Int. Cl.: H04L 41/0894, H04L 41/5009, H04L 41/5054, H04L 43/091, H04W 24/02

(54) **METHODS AND SYSTEMS FOR MANAGING NETWORK SLICE AND NETWORK SLICE SUBNET, AND RELATED APPARATUSES**
VERFAHREN UND SYSTEME ZUR VERWALTUNG VON NETZWERK-SLICES UND NETZWERK-SLICE-SUBNETZ UND ZUGEHÖRIGE VORRICHTUNGEN
PROCÉDÉS ET SYSTÈMES DE GESTION DE TRANCHE DE RÉSEAU ET DE SOUS-RÉSEAU DE TRANCHE DE RÉSEAU, ET APPAREILS ASSOCIÉS

(30) Priority: 30.06.2020 CN 202010623672
(43) Date of publication of application: 05.04.2023
(73) Proprietor: Huawei Technologies Co., Ltd., Longgang District, Shenzhen, Guangdong 518129 (CN)
(72) Inventor: ZHANG, Jian, Shenzhen, Guangdong 518129 (CN); JIA, Xiaoqian, Shenzhen, Guangdong 518129 (CN); XING, Xiaocheng, Shenzhen, Guangdong 518129 (CN)
(74) Representative: Maiwald GmbH
(86) International application number: PCT/CN2021/101911
(87) International publication number: WO 2022/001798

(56) References cited:
- WO-A1-2017/167215
- CN-A- 107 919 969
- CN-A- 108 293 004
- CN-A- 109 525 412
- CN-A- 110 062 407
- CN-A- 110 838 926
- US-B2- 10 681 150
- "3rd Generation Partnership Project; Technical Specification Group Services and System Aspects; Telecommunication management; Study on management aspects of communication services (Release 16)", vol. SA WG5, no. V16.1.0, 2 January 2020 (2020-01-02), pages 1 - 42, XP051841060, Retrieved from the Internet <URL:ftp://ftp.3gpp.org/Specs/archive/28_series/28.805/28805-g10.zip 28805-g10.doc> [retrieved on 20200102]
- HUAWEI: "Add UC and requirements for SLA monitoring and assurance for network slicing", vol. SA WG5, no. Spokane, US; 20181112 - 20181116, 16 November 2018 (2018-11-16), XP051565816, Retrieved from the Internet <URL:http://www.3gpp.org/ftp/Meetings%5F3GPP%5FSYNC/SA5/Docs/S5%2D187497%2Ezip> [retrieved on 20181116]
- HUAWEI: "Add the procedure of NWDAF assisted SLA assurance", vol. SA WG5, no. Online Meeting ;20200420 - 20200428, 10 April 2020 (2020-04-10), XP051874901, Retrieved from the Internet <URL:https://ftp.3gpp.org/tsg_sa/WG5_TM/TSGS5_130e/Docs/S5-202260.zip S5-202260 pCR TS 28.536 Add the procedure of NWDAF assisted SLA assurance.doc> [retrieved on 20200410]

## Description

### RELATED APPARATUS

This application claims priority to Chinese Patent Application No. 202010623672.3, filed with the China National Intellectual Property Administration on June 30, 2020 and entitled "NETWORK SLICE MANAGEMENT METHOD, NETWORK SLICE SUBNET MANAGEMENT METHOD, NETWORK SLICE AND NETWORK SLICE SUBNET MANAGEMENT SYSTEM, AND RELATED APPARATUS".

### TECHNICAL FIELD

This application relates to the field of communication technologies, and in particular, to a network slice management method, a network slice subnet management method, a network slice and network slice subnet management system, related apparatus, computer-readable storage medium and computer program product.

### BACKGROUND

With the rapid development of mobile communication, network service requirements are increasingly more differentiated. To meet different types of network service requirements, a physical network is divided at an end-to-end level to form network slices (Network Slice). In a 5G (5th Generation, fifth generation) network, the network slices may be classified into a plurality of types such as enhanced mobile broadband (enhanced Mobile Broadband, eMBB), ultra-reliable and low latency communications (ultra-reliable and low latency communications, URLLC), and massive Internet of things (Massive Internet of Things, MIoT), to provide different types of network service capabilities. The network slice includes one or more network slice subnets (Network Slice Subnet) such as a radio access network (Radio Access Network, RAN) network slice subnet, a transport network (Transport Network, TN) network slice subnet, and/or a core network (Core Network, CN) network slice subnet.

With the development of network slice technologies, network slice and network slice subnet management is also increasingly more important.

The document "3rd Generation Partnership Project; Technical Specification Group Services and System Aspects; Telecommunication management; Study on management aspects of communication services (Release 16)" (3GPP TR 28.805 V16.1.0) describes an assignment of communication service to an existing NSI, wherein an NSMF may create a new NSI or assign an existing NSI by performing a feasibility check.

### SUMMARY

The invention is set out in the appended set of claims.

Embodiments of this application provide a network slice management method, a network slice subnet management method, a network slice and network slice subnet management system, related apparatus, computer-readable storage medium and computer program product, to improve efficiency and effectiveness of network slice and network slice subnet management.

According to a first aspect, this application provides a network slice management method, where the method is performed by a decision management function device. In the method, the decision management function device receives a first policy request from a network slice management function device, where the first policy request carries a requirement for a network slice, and the first policy request is used to request a performance assurance policy of the network slice. Then, the decision management function device determines the performance assurance policy of the network slice based on the requirement for the network slice, and returns the performance assurance policy of the network slice to the network slice management function device.

In this application, the decision management function device determines the performance assurance policy of the network slice, and delivers the performance assurance policy of the network slice to the network slice management function device, so that the network slice management function device executes the performance assurance policy of the network slice, to implement performance assurance on the network slice. The performance assurance policy of the network slice facilitates automatic closed-loop performance assurance, and helps implement efficient and effective network slice management.

The performance assurance policy of the network slice includes any one or more of the following, or includes information used to obtain any one or more of the following:
a trigger condition, used to determine whether to continue to execute the performance assurance policy of the network slice;
a problem root cause, indicating a root cause of a performance problem of the network slice;
a management behavior, indicating a behavior of managing the network slice and/or a network slice subnet of the network slice; and
a management notification, indicating to notify a management device (namely, a network slice subnet management function device) of the network slice subnet to execute a management behavior on the network slice subnet.

In this implementation, the performance assurance policy of the network slice includes any one or more pieces of the foregoing content, or includes information used to obtain any one or more pieces of the foregoing content, that is, the performance assurance policy of the network slice may include a policy procedure (such as an instruction for triggering obtaining of any one or more pieces of the foregoing content), a policy algorithm (such as a method for obtaining a problem root cause or a method for determining a performance target), and/or a policy parameter (such as a trigger condition). Therefore, a management device of the network slice may perform performance assurance on the network slice according to the performance assurance policy. In this way, interaction between the management device of the network slice and other entities can be reduced, and performance assurance efficiency of the network slice can be further improved.

In an implementation, that the decision management function device determines the performance assurance policy of the network slice based on the requirement for the network slice specifically includes: The decision management function device obtains a first analysis result of the network slice from a management data analytics function device based on the requirement for the network slice, and determines the performance assurance policy of the network slice based on the first analysis result. The first analysis result of the network slice may be specifically one or more candidate performance assurance policies or partial information (for example, a problem root cause or a management behavior) in the performance assurance policy of the network slice.

In this implementation, the decision management function device requests the management data analytics function device to analyze the network slice, and determines the performance assurance policy of the network slice based on the analysis result from the management data analytics function device. An analysis capability of the management data analytics function device is strong. In this way, the analysis capability of the management data analytics function device is fully used, so that the finally determined performance assurance policy of the network slice is more effective.

In an implementation, that the decision management function device determines the performance assurance policy of the network slice based on the first analysis result includes: The decision management function device obtains optimization information related to the network slice from a self-organizing network function device, and determines the performance assurance policy of the network slice based on the optimization information related to the network slice and the first analysis result. The optimization information related to the network slice may be specifically optimization policies and/or policy execution statuses of various resources such as a radio resource, a CPU resource, and/or a bandwidth resource of the network slice. In this implementation, when determining the performance assurance policy of the network slice, the decision management function device refers to information provided by a plurality of devices, so that the finally determined performance assurance policy of the network slice is more effective.

Optionally, the decision management function device further receives a second policy request sent by the network slice management function device, where the second policy request carries the requirement for the network slice, and the second policy request is used to request a performance monitoring policy of the network slice. Then, the decision management function device determines the performance monitoring policy of the network slice based on the requirement for the network slice, and returns the performance monitoring policy of the network slice to the network slice management function device. In this solution, the decision management function device further determines the performance monitoring policy of the network slice, and delivers the performance monitoring policy of the network slice to the network slice management function device, so that the network slice management function device performs performance monitoring according to the performance monitoring policy of the network slice. This helps effectively learn of a running status of the network slice in a timely manner. In addition, this also facilitates performance assurance on the network slice.

Optionally, the first policy request further carries a requirement for the network slice subnet of the network slice, and the first policy request is further used to request a performance assurance policy of the network slice subnet. The requirement for the network slice subnet may be determined based on the requirement for the network slice. The method in this application further includes: The decision management function device determines the performance assurance policy of the network slice subnet based on the requirement for the network slice subnet, and returns the performance assurance policy of the network slice subnet to the network slice management function device. In this way, the decision management function device further determines and delivers the performance assurance policy of the network slice subnet. The performance assurance policy of the network slice subnet facilitates automatic closed-loop performance assurance of the network slice subnet, and helps implement efficient and effective network slice management and/or network slice subnet management. It should be understood that the network slice includes the network slice subnet, and network slice subnet management may also be referred to as network slice management in a broad sense. This is not limited in this application.

Optionally, the decision management function device further receives a third policy request from a network slice subnet management function device, where the third policy request carries a requirement for the network slice subnet of the network slice, and the third policy request is used to request a performance assurance policy of the network slice subnet. Then, the decision management function device determines the performance assurance policy of the network slice subnet based on the requirement for the network slice subnet, and returns the performance assurance policy of the network slice subnet to the network slice subnet management function device. In this way, the decision management function device further determines and delivers the performance assurance policy of the network slice subnet. The performance assurance policy of the network slice subnet facilitates automatic closed-loop performance assurance of the network slice subnet, and helps implement efficient and effective network slice management and/or network slice subnet management.

In an implementation that is not part of the invention as claimed, that the decision management function device determines the performance assurance policy of the network slice subnet based on the requirement for the network slice subnet includes: The decision management function device obtains a third analysis result of the network slice subnet from the management data analytics function device based on the requirement for the network slice subnet, and determines the performance assurance policy of the network slice subnet based on the third analysis result. The third analysis result of the network slice subnet may be specifically one or more candidate performance assurance policies or partial information (for example, a problem root cause or a management behavior) in the performance assurance policy of the network slice subnet.

In this implementation, the decision management function device requests the management data analytics function device to analyze the network slice subnet, and determines the performance assurance policy of the network slice subnet based on the analysis result from the management data analytics function device. An analysis capability of the management data analytics function device is strong. In this way, the analysis capability of the management data analytics function device is fully used, so that the finally determined performance assurance policy of the network slice subnet is more effective.

In an implementation that is not part of the invention as claimed, that the decision management function device determines the performance assurance policy of the network slice subnet based on the third analysis result includes: The decision management function device obtains optimization information related to the network slice subnet from the self-organizing network function device, and determines the performance assurance policy of the network slice subnet based on the optimization information related to the network slice subnet and the third analysis result. The optimization information related to the network slice subnet may be specifically optimization policies and/or policy execution statuses of various resources such as a radio resource, a CPU resource, and/or a bandwidth resource of the network slice subnet. In this implementation, when determining the performance assurance policy of the network slice subnet, the decision management function device refers to information provided by a plurality of devices, so that the finally determined performance assurance policy of the network slice subnet is more effective.

The performance assurance policy of the network slice subnet includes any one or more of the following, or includes information used to obtain any one or more of the following:
a trigger condition, used to determine whether to continue to execute the performance assurance policy of the network slice subnet;
a problem root cause, indicating a root cause of a performance problem of the network slice subnet;
a management behavior, indicating a behavior of managing the network slice subnet and/or a network element (a network function) of the network slice subnet; and
a management notification, indicating to notify a management device of the network element (a network function) to execute a management behavior on the network element (a network function) of the network slice subnet.

Optionally, and this option is not part of the invention as claimed, the decision management function device further receives a fourth policy request sent by the network slice subnet management function device, where the fourth policy request carries the requirement for the network slice subnet of the network slice, and the fourth policy request is used to request a performance monitoring policy of the network slice subnet. Then, the decision management function device determines the performance monitoring policy of the network slice subnet based on the requirement for the network slice subnet, and returns the performance monitoring policy of the network slice subnet to the network slice subnet management function device. In this solution, the decision management function device further determines the performance monitoring policy of the network slice subnet, and delivers the performance monitoring policy of the network slice subnet to the network slice subnet management function device, so that the network slice subnet management function device performs performance monitoring according to the performance monitoring policy of the network slice subnet. This helps effectively learn of a running status of the network slice subnet in a timely manner. In addition, this also facilitates performance assurance on the network slice subnet.

According to a second aspect, this application provides a network slice management method, where the method is performed by a network slice management function device. In the method, the network slice management function device obtains a performance assurance policy of a network slice based on a requirement for the network slice, and executes the performance assurance policy of the network slice. The performance assurance policy of the network slice facilitates automatic closed-loop performance assurance, helps implement efficient and effective network slice management, and also helps implement performance assurance on the network slice.

That the network slice management function device obtains a performance assurance policy of a network slice based on a requirement for the network slice includes: The network slice management function device sends a first policy request to a decision management function device, where the first policy request carries the requirement for the network slice, and the first policy request is used to request the performance assurance policy of the network slice. Then, the network slice management function device receives the performance assurance policy that is of the network slice and that is returned by the decision management function device. The performance assurance policy of the network slice is determined based on the requirement for the network slice. The decision management function device has a decision capability. In this way, the decision capability of the decision management function device is fully used, so that the finally determined performance assurance policy of the network slice is more effective.

In an implementation that is not part of the invention as claimed, that the network slice management function device obtains a performance assurance policy of a network slice based on a requirement for the network slice includes: The network slice management function device sends a first policy request to a management data analytics function device, where the first policy request carries the requirement for the network slice, and the first policy request is used to request the performance assurance policy of the network slice. Then, the network slice management function device receives the performance assurance policy that is of the network slice and that is returned by the management data analytics function device. The performance assurance policy of the network slice is determined based on the requirement for the network slice.

In an implementation that is not part of the invention as claimed, that the network slice management function device obtains a performance assurance policy of a network slice based on a requirement for the network slice includes: The network slice management function device determines the performance assurance policy of the network slice based on the requirement for the network slice.

In an implementation that is not part of the invention as claimed, that the network slice management function device determines the performance assurance policy of the network slice based on the requirement for the network slice includes: The network slice management function device obtains a first analysis result of the network slice from a management data analytics function device based on the requirement for the network slice, and determines the performance assurance policy of the network slice based on the first analysis result. The first analysis result of the network slice may be specifically one or more candidate performance assurance policies or partial information (for example, a problem root cause or a management behavior) in the performance assurance policy of the network slice. In this implementation, the network slice management function device requests the management data analytics function device to analyze the network slice, and determines the performance assurance policy of the network slice based on the analysis result from the management data analytics function device. An analysis capability of the management data analytics function device is strong. In this way, the analysis capability of the management data analytics function device is fully used, so that the finally determined performance assurance policy of the network slice is more effective.

In an implementation that is not part of the invention as claimed, that the network slice management function device determines the performance assurance policy of the network slice based on the first analysis result includes: The network slice management function device obtains optimization information related to the network slice from a self-organizing network function device, and determines the performance assurance policy of the network slice based on the optimization information related to the network slice and the first analysis result. The optimization information related to the network slice may be specifically optimization policies and/or policy execution statuses of various resources such as a radio resource, a CPU resource, and/or a bandwidth resource of the network slice. In this implementation, when determining the performance assurance policy of the network slice, the network slice management function device refers to information provided by a plurality of devices, so that the finally determined performance assurance policy of the network slice is more effective.

Optionally, and this option is not part of the invention as claimed, the method in this application further includes: The network slice management function device obtains a performance monitoring policy of the network slice based on the requirement for the network slice. Then, the network slice management function device performs performance monitoring on the network slice according to the performance monitoring policy of the network slice. The performance monitoring policy of the network slice helps effectively learn of a running status of the network slice in a timely manner, and also facilitates performance assurance on the network slice. Further, the network slice management function device executes the performance assurance policy of the network slice based on a performance monitoring result of the network slice.

In an implementation that is not part of the invention as claimed, that the network slice management function device executes the performance assurance policy of the network slice based on a performance monitoring result of the network slice includes: When detecting a monitoring event in the performance monitoring policy of the network slice, the network slice management function device executes the performance assurance policy of the network slice.

Optionally, and this option is not part of the invention as claimed, the method in this application further includes: The network slice management function device obtains a performance assurance policy of a network slice subnet of the network slice based on a requirement for the network slice subnet, where the requirement for the network slice subnet is determined based on the requirement for the network slice. Then, the network slice management function device further sends the performance assurance policy of the network slice subnet to a management function device of the network slice subnet. The performance assurance policy of the network slice subnet may be carried in a slice profile.

In an implementation that is not part of the invention as claimed, that the network slice management function device obtains a performance assurance policy of a network slice subnet based on a requirement for the network slice subnet includes: The network slice management function device sends the first policy request to the decision management function device, where the first policy request carries the requirement for the network slice subnet, and the first policy request is used to request the performance assurance policy of the network slice subnet. Then, the network slice management function device receives the performance assurance policy that is of the network slice subnet and that is returned by the decision management function device. The performance assurance policy of the network slice subnet is determined based on the requirement for the network slice subnet.

In an implementation that is not part of the invention as claimed, that the network slice management function device obtains a performance assurance policy of a network slice subnet based on a requirement for the network slice subnet includes: The network slice management function device sends the first policy request to the management data analytics function device, where the first policy request carries the requirement for the network slice subnet, and the first policy request is used to request the performance assurance policy of the network slice subnet. Then, the network slice management function device receives the performance assurance policy that is of the network slice subnet and that is returned by the management data analytics function device. The performance assurance policy of the network slice subnet is determined based on the requirement for the network slice subnet.

In an implementation that is not part of the invention as claimed, that the network slice management function device obtains a performance assurance policy of a network slice subnet based on a requirement for the network slice subnet includes: The network slice management function device determines the performance assurance policy of the network slice subnet based on the requirement for the network slice subnet.

In an implementation that is not part of the invention as claimed, that the network slice management function device determines the performance assurance policy of the network slice subnet based on the requirement for the network slice subnet includes: The network slice management function device obtains a third analysis result of the network slice subnet from the management data analytics function device based on the requirement for the network slice subnet, and determines the performance assurance policy of the network slice subnet based on the third analysis result. The third analysis result of the network slice subnet may be specifically one or more candidate performance assurance policies or partial information (for example, a problem root cause or a management behavior) in the performance assurance policy of the network slice subnet. In this implementation, the network slice management function device requests the management data analytics function device to analyze the network slice subnet, and determines the performance assurance policy of the network slice subnet based on the analysis result from the management data analytics function device. An analysis capability of the management data analytics function device is strong. In this way, the analysis capability of the management data analytics function device is fully used, so that the finally determined performance assurance policy of the network slice subnet is more effective.

In an implementation that is not part of the invention as claimed, that the network slice management function device determines the performance assurance policy of the network slice subnet based on the third analysis result includes: The network slice management function device obtains optimization information related to the network slice subnet from the self-organizing network function device, and determines the performance assurance policy of the network slice subnet based on the optimization information related to the network slice subnet and the third analysis result. The optimization information related to the network slice subnet may be specifically optimization policies and/or policy execution statuses of various resources such as a radio resource, a CPU resource, and/or a bandwidth resource of the network slice subnet. In this implementation, when determining the performance assurance policy of the network slice subnet, the network slice management function device refers to information provided by a plurality of devices, so that the finally determined performance assurance policy of the network slice subnet is more effective.

Optionally, and this option is not part of the invention as claimed, the method in this application further includes: The network slice management function device obtains a performance monitoring policy of the network slice subnet of the network slice based on the requirement for the network slice subnet, where the requirement for the network slice subnet is determined based on the requirement for the network slice. Then, the network slice management function device further sends the performance monitoring policy of the network slice subnet to the management function device of the network slice subnet. The performance monitoring policy of the network slice subnet may be carried in the slice profile.

According to a third aspect, this application provides a network slice subnet management method, where the method is performed by a network slice subnet management function device. In the method, the network slice subnet management function device obtains a performance assurance policy of a network slice subnet, and executes the performance assurance policy of the network slice subnet. The performance assurance policy of the network slice subnet facilitates automatic closed-loop performance assurance, helps implement efficient and effective network slice subnet management, and also helps implement performance assurance on the network slice subnet.

The performance assurance policy of the network slice subnet includes any one or more of the following, or includes information used to obtain any one or more of the following:
a trigger condition, used to determine whether to continue to execute the performance assurance policy of the network slice subnet;
a problem root cause, indicating a root cause of a performance problem of the network slice subnet;
a management behavior, indicating a behavior of managing the network slice subnet and/or a network element (a network function) of the network slice subnet; and
a management notification, indicating to notify a management device of the network element (a network function) to execute a management behavior on the network element (a network function) of the network slice subnet.

In an implementation that is not part of the invention as claimed, that the network slice subnet management function device obtains a performance assurance policy of a network slice subnet includes: The network slice subnet management function device receives the performance assurance policy that is of the network slice subnet and that is sent by a network slice management function device. The performance assurance policy of the network slice subnet may be carried in a slice profile.

That the network slice subnet management function device obtains a performance assurance policy of a network slice subnet includes: The network slice subnet management function device sends a third policy request to a decision management function device, where the third policy request carries a requirement for the network slice subnet, and the third policy request is used to request the performance assurance policy of the network slice subnet. Then, the network slice subnet management function device receives the performance assurance policy that is of the network slice subnet and that is returned by the decision management function device. The performance assurance policy of the network slice subnet is determined based on the requirement for the network slice subnet.

In an implementation that is not part of the invention as claimed, that the network slice subnet management function device obtains a performance assurance policy of a network slice subnet includes: The network slice subnet management function device sends a third policy request to a management data analytics function device, where the third policy request carries a requirement for the network slice subnet, and the third policy request is used to request the performance assurance policy of the network slice subnet. Then, the network slice subnet management function device receives the performance assurance policy that is of the network slice subnet and that is returned by the management data analytics function device. The performance assurance policy of the network slice subnet is determined based on the requirement for the network slice.

In an implementation that is not part of the invention as claimed, that the network slice subnet management function device obtains a performance assurance policy of a network slice subnet includes: The network slice subnet management function device determines the performance assurance policy of the network slice subnet based on a requirement for the network slice subnet.

In an implementation that is not part of the invention as claimed, that the network slice subnet management function device determines the performance assurance policy of the network slice subnet based on a requirement for the network slice subnet includes: The network slice subnet management function device obtains a third analysis result of the network slice subnet from a management data analytics function device based on a requirement for the network slice subnet, and determines the performance assurance policy of the network slice subnet based on the third analysis result. The third analysis result of the network slice subnet may be specifically one or more candidate performance assurance policies or partial information (for example, a problem root cause or a management behavior) in the performance assurance policy of the network slice subnet.

In an implementation that is not part of the invention as claimed, that the network slice subnet management function device determines the performance assurance policy of the network slice subnet based on the third analysis result includes: The network slice subnet management function device obtains optimization information related to the network slice subnet from a self-organizing network function device, and determines the performance assurance policy of the network slice subnet based on the optimization information related to the network slice subnet and the third analysis result. The optimization information related to the network slice subnet may be specifically optimization policies and/or policy execution statuses of various resources such as a radio resource, a CPU resource, and/or a bandwidth resource of the network slice subnet.

Optionally, and this option is not part of the invention as claimed, the method in this application further includes: The network slice subnet management function device obtains a performance monitoring policy of the network slice subnet, and then performs performance monitoring on the network slice subnet according to the performance monitoring policy of the network slice subnet. The performance monitoring policy of the network slice subnet helps effectively learn of a running status of the network slice subnet in a timely manner, and also facilitates performance assurance on the network slice subnet. Further, the network slice subnet management function device executes the performance assurance policy of the network slice subnet based on a performance monitoring result of the network slice subnet.

In an implementation that is not part of the invention as claimed, that the network slice subnet management function device executes the performance assurance policy of the network slice subnet based on a performance monitoring result of the network slice subnet includes: When detecting a monitoring event in the performance monitoring policy of the network slice subnet, the network slice subnet management function device executes the performance assurance policy of the network slice subnet.

The application provides another network slice management method which is not part of the invention as claimed, where the method is performed by a decision management function device.

In the method, the decision management function device receives a second policy request sent by a network slice management function device, where the second policy request carries a requirement for a network slice, and the second policy request is used to request a performance monitoring policy of the network slice. Then, the decision management function device determines the performance monitoring policy of the network slice based on the requirement for the network slice, and returns the performance monitoring policy of the network slice to the network slice management function device.

In this method, the decision management function device determines the performance monitoring policy of the network slice, and delivers the performance monitoring policy of the network slice to the network slice management function device, so that the network slice management function device executes the performance monitoring policy of the network slice, to implement performance monitoring on the network slice. This helps effectively learn of a running status of the network slice in a timely manner. In addition, this also facilitates performance assurance on the network slice.

In an implementation of this method which is not claimed, the performance monitoring policy of the network slice includes any one or more of the following, or includes information used to obtain any one or more of the following:
(1) a monitored object, indicating a monitored performance parameter;
(2) a monitoring period, indicating a performance monitoring (or performance measurement) period;
(3) a start condition, indicating a condition for starting performance monitoring;
(4) a stop condition, indicating a condition for stopping performance monitoring; and
(5) a monitoring event, namely, a triggering event during monitoring, used to trigger an operation such as reporting performance measurement data of the network slice, determining that a fault occurs in the network slice, reporting fault information of the network slice, determining that an alarm occurs in the network slice, reporting alarm information of the network slice, and/or executing a performance assurance policy of the network slice.

In an implementation of this method which is not claimed, that the decision management function device determines the performance monitoring policy of the network slice based on the requirement for the network slice specifically includes: The decision management function device obtains a second analysis result of the network slice from a management data analytics function device based on the requirement for the network slice, and determines the performance monitoring policy of the network slice based on the second analysis result. The second analysis result of the network slice may be specifically one or more candidate performance monitoring policies or partial information (for example, a monitored object or a monitoring event) in the performance monitoring policy of the network slice.

In an implementation of this method which is not claimed, that the decision management function device determines the performance monitoring policy of the network slice based on the second analysis result includes: The decision management function device obtains optimization information related to the network slice from a self-organizing network function device, and determines the performance monitoring policy of the network slice based on the optimization information related to the network slice and the second analysis result. The optimization information related to the network slice may be specifically optimization policies and/or policy execution statuses of various resources such as a radio resource, a CPU resource, and/or a bandwidth resource of the network slice. In this implementation, when determining the performance monitoring policy of the network slice, the decision management function device refers to information provided by a plurality of devices, so that the finally determined performance monitoring policy of the network slice is more effective.

In an implementation of this method which is not claimed, the second policy request further carries a requirement for a network slice subnet of the network slice, and the second policy request is further used to request a performance monitoring policy of the network slice subnet. The method in this application further includes: The decision management function device determines the performance monitoring policy of the network slice subnet based on the requirement for the network slice subnet, and returns the performance monitoring policy of the network slice subnet to the network slice management function device. The performance monitoring policy of the network slice subnet helps effectively learn of a running status of the network slice subnet in a timely manner, and also facilitates performance assurance on the network slice subnet.

Optionally, this method in this application further includes: The decision management function device receives a fourth policy request sent by a network slice subnet management function device, where the fourth policy request carries a requirement for a network slice subnet, and the fourth policy request is used to request a performance monitoring policy of the network slice subnet. Then, the decision management function device determines the performance monitoring policy of the network slice subnet based on the requirement for the network slice subnet, and returns the performance monitoring policy of the network slice subnet to the network slice subnet management function device.

In an implementation of this method which is not claimed, the performance monitoring policy of the network slice subnet includes any one or more of the following, or includes information used to obtain any one or more of the following:
(1) a monitored object, indicating a monitored performance parameter;
(2) a monitoring period, indicating a performance monitoring (or performance measurement) period;
(3) a start condition, indicating a condition for starting performance monitoring;
(4) a stop condition, indicating a condition for stopping performance monitoring; and
(5) a monitoring event, namely, a triggering event during monitoring, used to trigger an operation such as reporting performance measurement data of the network slice subnet, determining that a fault occurs in the network slice subnet, reporting fault information of the network slice subnet, determining that an alarm occurs in the network slice subnet, reporting alarm information of the network slice subnet, and/or executing a performance assurance policy of the network slice subnet.

In an implementation of this method which is not claimed, that the decision management function device determines the performance monitoring policy of the network slice subnet based on the requirement for the network slice subnet specifically includes: The decision management function device obtains a fourth analysis result of the network slice subnet from the management data analytics function device based on the requirement for the network slice subnet, and determines the performance monitoring policy of the network slice subnet based on the fourth analysis result. The fourth analysis result of the network slice subnet may be specifically one or more candidate performance monitoring policies or partial information (for example, a monitored object or a monitoring event) in the performance monitoring policy of the network slice subnet.

In an implementation of this method which is not claimed, that the decision management function device determines the performance monitoring policy of the network slice subnet based on the fourth analysis result includes: The decision management function device obtains optimization information related to the network slice subnet from the self-organizing network function device, and determines the performance monitoring policy of the network slice subnet based on the optimization information related to the network slice subnet and the fourth analysis result. The optimization information related to the network slice subnet may be specifically optimization policies and/or policy execution statuses of various resources such as a radio resource, a CPU resource, and/or a bandwidth resource of the network slice subnet.

According to another method which is not part of the invention as claimed, this application provides a network slice management method, where the method is performed by a network slice management function device. In the method, the network slice management function device obtains a performance monitoring policy of a network slice based on a requirement for the network slice, and performs performance monitoring according to the performance monitoring policy of the network slice.

In an implementation of this method which is not claimed, that the network slice management function device obtains a performance monitoring policy of a network slice based on a requirement for the network slice includes: The network slice management function device sends a second policy request to a decision management function device, where the second policy request carries the requirement for the network slice, and the second policy request is used to request the performance monitoring policy of the network slice. Then, the network slice management function device receives the performance monitoring policy that is of the network slice and that is returned by the decision management function device. The performance monitoring policy of the network slice is determined based on the requirement for the network slice.

In an implementation of this method which is not claimed, that the network slice management function device obtains a performance monitoring policy of a network slice based on a requirement for the network slice includes: The network slice management function device sends a second policy request to a management data analytics function device, where the second policy request carries the requirement for the network slice, and the second policy request is used to request the performance monitoring policy of the network slice. Then, the network slice management function device receives the performance monitoring policy that is of the network slice and that is returned by the management data analytics function device. The performance monitoring policy of the network slice is determined based on the requirement for the network slice.

In an implementation of this method which is not claimed, that the network slice management function device obtains a performance monitoring policy of a network slice based on a requirement for the network slice includes: The network slice management function device determines the performance monitoring policy of the network slice based on the requirement for the network slice.

In an implementation of this method which is not claimed, that the network slice management function device determines the performance monitoring policy of the network slice based on the requirement for the network slice includes: The network slice management function device obtains a second analysis result of the network slice from a management data analytics function device based on the requirement for the network slice, and determines the performance monitoring policy of the network slice based on the second analysis result. The second analysis result of the network slice may be specifically one or more candidate performance monitoring policies or partial information (for example, a monitored object or a monitoring event) in the performance monitoring policy of the network slice.

In an implementation of this method which is not claimed, that the network slice management function device determines the performance monitoring policy of the network slice based on the second analysis result includes: The network slice management function device obtains optimization information related to the network slice from a self-organizing network function device, and determines the performance monitoring policy of the network slice based on the optimization information related to the network slice and the second analysis result. The optimization information related to the network slice may be specifically optimization policies and/or policy execution statuses of various resources such as a radio resource, a CPU resource, and/or a bandwidth resource of the network slice.

Optionally, the network slice management function device further obtains a performance monitoring policy of a network slice subnet of the network slice based on a requirement for the network slice subnet, and sends the performance monitoring policy of the network slice subnet to a management device of the network slice subnet.

In an implementation of this method which is not claimed, the second policy request further carries a requirement for a network slice subnet of the network slice, the second policy request is further used to request a performance monitoring policy of the network slice subnet, and the method further includes: The network slice management function device receives the performance monitoring policy that is of the network slice subnet and that is returned by the decision management function device. The performance monitoring policy of the network slice subnet is determined based on the requirement for the network slice subnet.

According to another method which is not part of the invention as claimed, this application provides a network slice subnet management method, where the method is performed by a network slice subnet management function device. In the method, the network slice subnet management function device obtains a performance monitoring policy of a network slice subnet, and performs performance monitoring according to the performance monitoring policy of the network slice subnet.

In an implementation of this method which is not claimed, that the network slice subnet management function device obtains a performance monitoring policy of a network slice subnet includes: The network slice subnet management function device receives the performance monitoring policy that is of the network slice subnet and that is sent by a network slice management function device.

In an implementation of this method which is not claimed, that the network slice subnet management function device obtains a performance monitoring policy of a network slice subnet includes: The network slice subnet management function device sends a fourth policy request to a decision management function device, where the fourth policy request carries a requirement for the network slice subnet, and the fourth policy request is used to request the performance monitoring policy of the network slice subnet. Then, the network slice subnet management function device receives the performance monitoring policy that is of the network slice subnet and that is returned by the decision management function device. The performance monitoring policy of the network slice subnet is determined based on the requirement for the network slice subnet.

In an implementation of this method which is not claimed, that the network slice subnet management function device obtains a performance monitoring policy of a network slice subnet includes: The network slice subnet management function device sends a fourth policy request to a management data analytics function device, where the fourth policy request carries a requirement for the network slice subnet, and the fourth policy request is used to request the performance monitoring policy of the network slice subnet. Then, the network slice subnet management function device receives the performance monitoring policy that is of the network slice subnet and that is returned by the management data analytics function device. The performance monitoring policy of the network slice subnet is determined based on the requirement for the network slice subnet.

In an implementation of this method which is not claimed, that the network slice subnet management function device obtains a performance monitoring policy of a network slice subnet includes: The network slice subnet management function device determines the performance monitoring policy of the network slice subnet based on a requirement for the network slice subnet.

In an implementation of this method which is not claimed, that the network slice subnet management function device determines the performance monitoring policy of the network slice subnet based on a requirement for the network slice subnet includes: The network slice subnet management function device obtains a fourth analysis result of the network slice subnet from a management data analytics function device based on the requirement for the network slice subnet, and determines the performance monitoring policy of the network slice subnet based on the fourth analysis result. The fourth analysis result of the network slice subnet may be specifically one or more candidate performance monitoring policies or partial information (for example, a monitored object or a monitoring event) in the performance monitoring policy of the network slice subnet.

In an implementation of this method which is not claimed, that the network slice subnet management function device determines the performance monitoring policy of the network slice subnet based on the fourth analysis result includes: The network slice subnet management function device obtains optimization information related to the network slice subnet from a self-organizing network function device, and determines the performance monitoring policy of the network slice subnet based on the optimization information related to the network slice subnet and the fourth analysis result. The optimization information related to the network slice subnet may be specifically optimization policies and/or policy execution statuses of various resources such as a radio resource, a CPU resource, and/or a bandwidth resource of the network slice subnet.

According to another aspect, this application provides a communication apparatus, configured to perform the method according to the invention as claimed.

According to another aspect, this application provides a network slice and network slice subnet management system. The system includes a decision management function device and a network slice management function device, which are configured to perform the corresponding method according to the invention as claimed.

Optionally, the system further includes a network slice subnet management function device. The network slice subnet management function device is configured to perform the corresponding method according to the invention as claimed.

According to another aspect, this application provides a computer-readable storage medium, where the readable storage medium stores instructions, and when the instructions are run, a device running the instructions can implement any method according to the invention as claimed.

According to another aspect, this application provides a computer program product, where when the computer program product is run on a computer, the computer is enabled to perform any method according to the invention as claimed.

### DESCRIPTION OF DRAWINGS

To describe technical solutions in embodiments of this application or in the background more clearly, the following describes the accompanying drawings used in embodiments of this application or in the background.
FIG. 1 is a schematic diagram of a system architecture according to an embodiment of this application;
FIG. 2 is a flowchart of a network slice management method according to an embodiment of this application;
FIG. 3 is a flowchart of another network slice management method according to an embodiment of this application;
FIG. 4 is a flowchart of a network slice subnet management method according to an embodiment of this application;
FIG. 5 is a flowchart of another network slice subnet management method according to an embodiment of this application;
FIG. 6A and FIG. 6B are a flowchart of another network slice and network slice subnet management method according to an embodiment of this application;
FIG. 7A and FIG. 7B are a flowchart of another network slice and network slice subnet management method according to an embodiment of this application;
FIG. 8A(1) is a schematic diagram of a model of a network slice according to an embodiment of this application;

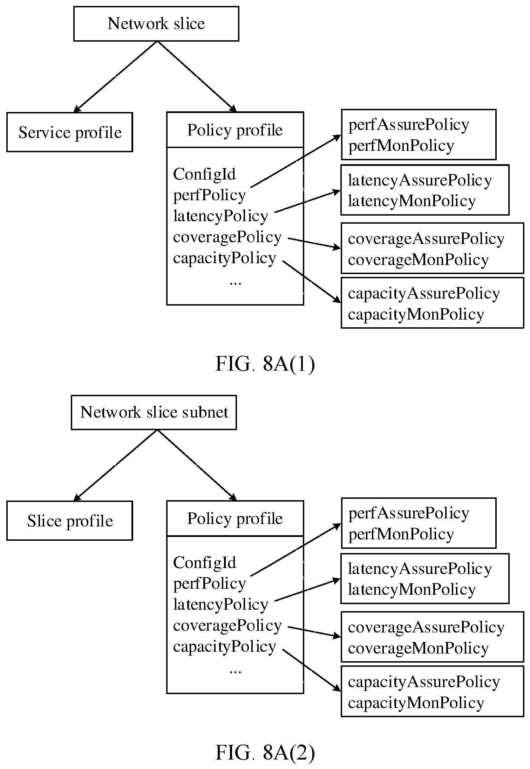

FIG. 8A(2) is a schematic diagram of a model of a network slice subnet according to an embodiment of this application;

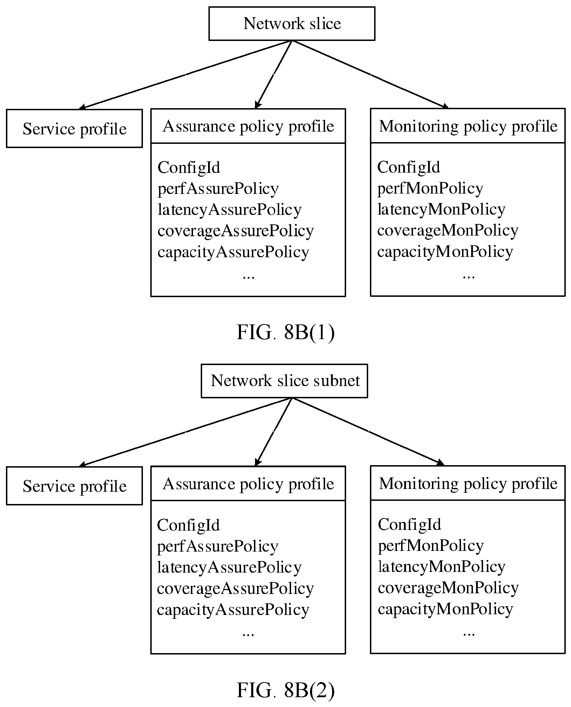

FIG. 8B(1) is a schematic diagram of a model of another network slice according to an embodiment of this application;
FIG. 8B(2) is a schematic diagram of a model of another network slice subnet according to an embodiment of this application;

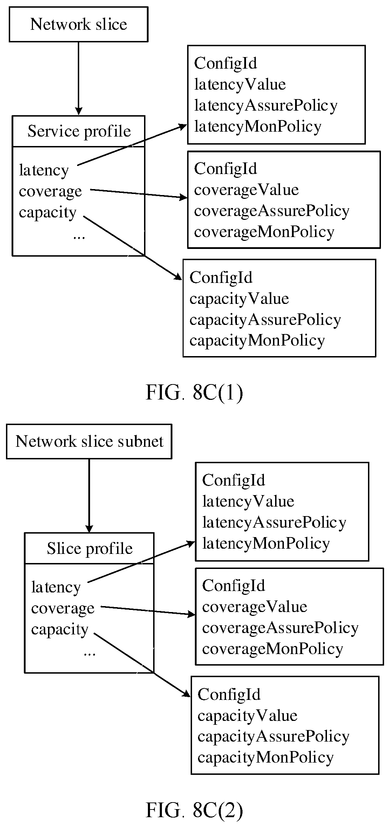

FIG. 8C(1) is a schematic diagram of a model of another network slice according to an embodiment of this application;
FIG. 8C(2) is a schematic diagram of a model of another network slice subnet according to an embodiment of this application;

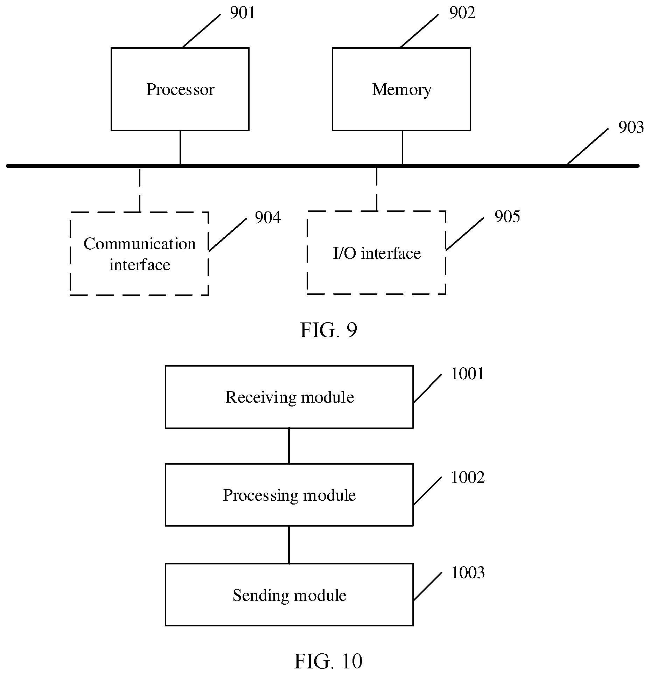

FIG. 9 is a schematic diagram of a structure of a network slice and network slice subnet management apparatus according to an embodiment of this application;
FIG. 10 is a schematic diagram of a structure of another network slice and network slice subnet management apparatus according to an embodiment of this application;

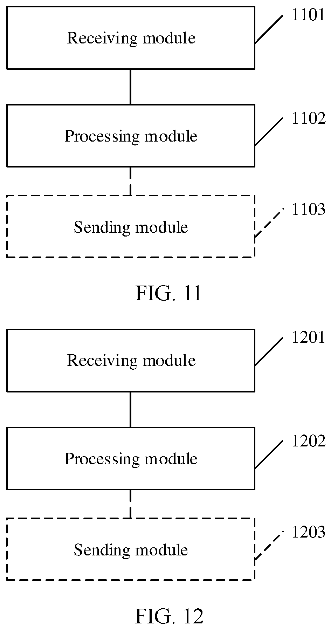

FIG. 11 is a schematic diagram of a structure of another network slice and network slice subnet management apparatus according to an embodiment of this application; and
FIG. 12 is a schematic diagram of a structure of another network slice subnet management apparatus according to an embodiment of this application.

### DESCRIPTION OF EMBODIMENTS

The following describes embodiments of this application with reference to the accompanying drawings in embodiments of this application.

This application may be applicable to a fifth generation (5G) mobile communication network architecture or a future network.

To facilitate understanding of this application, some concepts related to a network slice technology are first described herein.

A network slice means customizing, on a physical or virtual network infrastructure based on different service requirements, logical networks having different network capabilities and network features. The network slice may be a complete end-to-end network that includes a terminal, a RAN, a TN, a CN, and an application server, can provide a communication service, and has a specific network capability. Alternatively, the network slice may be any combination of the terminal, the RAN, the TN, the CN. and the application server. For example, the network slice includes only the RAN and the CN.

A network slice subnet is a logical network that is configured by combining several network functions and corresponding network resources, and can provide a network service. The network slice subnet is an integral part of the network slice.

A network slice instance (Network Slice Instance, NSI) is an actually deployed logical network that can meet a specific network feature or service requirement. One network slice instance may provide one or more services. A network slice instance may provide a complete end-to-end network service, and the network slice instance may include a network slice subnet instance (Network Slice Subnet Instance, NSSI) and/or a network function. The network function may include a physical network function and/or a virtual network function. The physical network function and/or the virtual network function are/is collectively referred to as a network function below.

A network slice subnet instance may not need to provide a complete end-to-end network service. The network slice subnet instance may be a set formed by network functions of a same device vendor in a network slice instance, or may be a set of network functions grouped based on a domain, for example, a CN network slice subnet instance or a RAN network slice subnet instance, or may be a set formed in another manner. One network slice instance may include several network slice subnet instances, and each network slice subnet instance includes several network functions and/or several network slice subnet instances. One network slice instance may include several network slice subnet instances and network functions that are not grouped as network slice subnet instances. One network slice instance may alternatively include only several network functions.

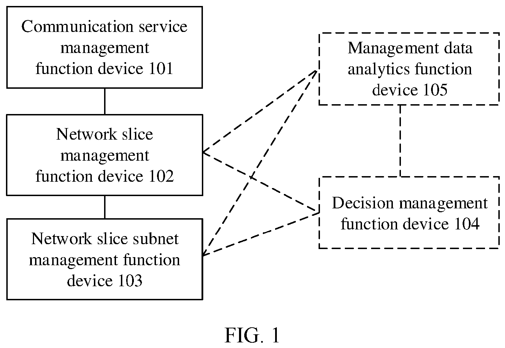

FIG. 1 is a diagram of a system architecture to which an embodiment of this application is applied. The following briefly describes a device in the system to which this embodiment of this application is applied and a main function of the device. Subsequent embodiments of this application further provide detailed descriptions. The system may include a communication service management function (Communication Service Management Function, CSMF) device 101, a network slice management function (Network Slice Management Function, NSMF) device 102, a network slice subnet management function (Network Slice Subnet Management Function, NSSMF) device 103, a decision management function (Decision Management Function, DMF) device 104, and/or a management data analytics function (Management Data Analytics Function, MDAF) device 105.

The CSMF device 101 has a communication service management function, that is, provides a communication service management service. Therefore, the CSMF device 101 may also be referred to as a communication service management service provider (Communication Service Management Service_Provider, CSMS_Provider) or a communication service management service producer (Communication Service Management Service_Producer, CSMS_Producer). Specifically, the CSMF device 101 is configured to: receive a communication service requirement of a user, and provide a communication service (that is, deploy a communication service instance) based on the communication service requirement. The CSMF device 101 converts the communication service requirement into a requirement for a network slice, and sends the requirement for the network slice to the NSMF device 102. The user herein may be specifically an operator, a third-party customer, and/or the like.

The NSMF device 102 has a network slice management function, that is, provides a network slice management service. Therefore, the NSMF device 102 may also be referred to as a network slice management service provider (Network Slice Management Service_Provider, NSMS_Provider) or a network slice management service producer (Network Slice Management Service_Producer, NSMS_Producer). Specifically, the NSMF device 102 is configured to: receive the requirement that is sent by the CSMF device 101 and that is for the network slice, and provide a network slice (that is, deploy a network slice instance) based on the requirement for the network slice.

The NSMF device 102 may be further configured to: obtain a performance assurance policy of the network slice based on the requirement for the network slice, and execute the performance assurance policy of the network slice. The NSMF device 102 may be further configured to: obtain a performance monitoring policy of the network slice based on the requirement for the network slice, and perform performance monitoring on the network slice according to the performance monitoring policy. Optionally, the NSMF device 102 is configured to: when detecting a monitoring event in the performance monitoring policy, execute the performance assurance policy. Specifically, the NSMF device 102 is configured to obtain the performance assurance policy of the network slice and/or the performance monitoring policy of the network slice from the DMF device 104. The NSMF device 102 may be further configured to: obtain a performance assurance policy of a network slice subnet of the network slice and/or a performance monitoring policy of the network slice subnet from the DMF device 104, and send the performance assurance policy of the network slice subnet and/or the performance monitoring policy of the network slice subnet to the NSSMF device 103.

The NSMF device 102 is further configured to: decompose the requirement for the network slice into a requirement for a network slice subnet, and send the requirement for the network slice subnet to the corresponding NSSMF device 103. For example, the NSMF device 102 decomposes the requirement for the network slice into a requirement for a RAN network slice subnet, a requirement for a TN network slice subnet, and a requirement for a CN network slice subnet. An average latency is used as an example for description. If the requirement for the network slice is that an average latency is less than 12 ms, after the requirement for the network slice is decomposed, the obtained requirement for the RAN network slice subnet is that an average latency is less than 5 ms, the obtained requirement for the TN network slice subnet is that an average latency is less than 3 ms, and the obtained requirement for the CN network slice subnet is that an average latency is less than 4 ms. Further, the NSMF device 102 further sends the requirement for the RAN network slice subnet to a RAN NSSMF device, sends the requirement for the CN network slice subnet to a CN NSSMF device, and sends the requirement for the TN network slice subnet to a TN NSSMF device.

FIG. 1 shows an example of an NSSMF device. A quantity of devices in the system architecture is not limited in this application.

The NSSMF device 103 has a network slice subnet management function, that is, provides a network slice subnet management service. Therefore, the NSSMF device 103 may also be referred to as a network slice subnet management service provider (Network Slice Subnet Management Service_Provider, NSSMS_Provider) or a network slice subnet management service producer (Network Slice Subnet Management Service_Producer, NSSMS_Producer). Specifically, the NSSMF device 103 is configured to: receive the requirement that is sent by the NSMF device 102 and that is for the network slice subnet, and provide a network slice subnet (that is, deploy a network slice subnet instance) based on the requirement for the network slice subnet.

The NSSMF device 103 may be further configured to: obtain a performance assurance policy of the network slice subnet, and execute the performance assurance policy of the network slice subnet. The NSSMF device 103 may be further configured to: obtain a performance monitoring policy of the network slice subnet, and perform performance monitoring on the network slice subnet according to the performance monitoring policy of the network slice subnet. Optionally, the NSSMF device 103 is configured to: when detecting a monitoring event in the performance monitoring policy of the network slice subnet, execute the performance assurance policy. Specifically, the NSSMF device 103 is configured to obtain the performance assurance policy of the network slice subnet and/or the performance monitoring policy of the network slice subnet from the DMF device 104. The NSSMF device 103 may further obtain the performance assurance policy of the network slice subnet and/or the performance monitoring policy of the network slice subnet from the NSMF device 102.

The DMF device 104 is configured to make a decision on related information of the network slice and/or the network slice subnet, that is, the DMF device 104 has a decision management function, and can provide a decision management service. Therefore, the DMF device 104 may also be referred to as a decision management service provider (Decision Management Service_Provider, DMS_Provider) or a decision management service producer (Decision Management Service_Producer, DMS_Producer). In addition, the device may also be referred to as a management decision function device, a policy management function device, a performance management function device, or the like. Specifically, the DMF device 104 is configured to determine the performance assurance policy of the network slice, the performance monitoring policy of the network slice, the performance assurance policy of the network slice subnet, and/or the performance monitoring policy of the network slice subnet.

Optionally, the DMF device 104 is further configured to: request the MDAF device 105 to perform performance assurance analysis on the network slice, and determine the performance assurance policy of the network slice based on a first analysis result that is returned by the MDAF device 105 and that is obtained through performance assurance analysis on the network slice. The case is similar for the performance monitoring policy of the network slice, the performance assurance policy of the network slice subnet, and/or the performance monitoring policy of the network slice subnet. Details are not described again.

The MDAF device 105 is configured to analyze the related information of the network slice and/or the network slice subnet, that is, the MDAF device 105 has a management data analysis function, and can provide a management data analysis service. Therefore, the MDAF device 105 may also be referred to as a management data analytics service provider (Management Data Analytics Service_Provider, MDAS_Provider) or a management data analytics service producer (Management Data Analytics Service_Producer, MDAS_Producer). Specifically, the MDAF device 105 is configured to: analyze the performance assurance policy of the network slice, the performance monitoring policy of the network slice, the performance assurance policy of the network slice subnet, and/or the performance monitoring policy of the network slice subnet, and send an analysis result to the DMF device 104. It should be understood that the MDAF device 105 may be deployed in a centralized manner to analyze the related information of the network slice and the network slice subnet, or the MDAF device 105 may be deployed separately at different levels. For example, the MDAF device 105 is deployed at a network slice level to analyze the related information of the network slice, and the MDAF device 105 is deployed at a network slice subnet level to provide the related information of the network slice subnet.

It should be understood that a function of the DMF device 104 may be deployed in a separate physical device, or may be deployed in another device. This is not limited in this embodiment of this application.

In a possible implementation, a function of the DMF device 104 is deployed on the NSMF device 102 (or the DMF device 104 and the NSMF device 102 are combined). In this case, the NSMF device 102 has the function of the DMF device 104. In this case, the NSMF device 102 may be further configured to determine the performance assurance policy of the network slice. Optionally, the NSMF device 102 may be further configured to: request the MDAF device 105 to analyze the performance assurance policy of the network slice, and determine the performance assurance policy of the network slice based on an analysis result returned by the MDAF device 105. The case is similar for the performance monitoring policy of the network slice, the performance assurance policy of the network slice subnet, and/or the performance monitoring policy of the network slice subnet. Details are not described again.

In a possible implementation, a function of the DMF device 104 is separately deployed on the NSMF device 102 and the NSSMF device 103 at different levels. In this case, the NSMF device 102 has a function of making a decision on the related information of the network slice. The NSSMF device 103 has a function of making a decision on the related information of the network slice subnet. Specifically, the NSMF device 102 may be further configured to determine the performance assurance policy of the network slice. Optionally, the NSMF device 102 may be further configured to: request the MDAF device 105 to analyze the performance assurance policy of the network slice, and determine the performance assurance policy of the network slice based on an analysis result returned by the MDAF device 105. The case is similar for the performance monitoring policy of the network slice. Details are not described again. Specifically, the NSSMF device 103 may be further configured to determine the performance assurance policy of the network slice subnet. Optionally, the NSSMF device 103 may be further configured to: request the MDAF device 105 to analyze the performance assurance policy of the network slice subnet, and determine the performance assurance policy of the network slice subnet based on an analysis result returned by the MDAF device 105. The case is similar for the performance monitoring policy of the network slice subnet. Details are not described again.

In a possible implementation, a function of the DMF device 104 is deployed on the MDAF device 105 (or the DMF device 104 and the MDAF device 105 are combined). In this case, the MDAF device 105 has the function of the DMF device 104. In this case, the MDAF device 105 is configured to make a decision on the related information of the network slice and/or the network slice subnet. Specifically, the MDAF device 105 is configured to determine the performance assurance policy of the network slice, the performance monitoring policy of the network slice, the performance assurance policy of the network slice subnet, and/or the performance monitoring policy of the network slice subnet. Correspondingly, the NSMF device 102 is configured to obtain the performance assurance policy of the network slice, the performance monitoring policy of the network slice, the performance assurance policy of the network slice subnet, and/or the performance monitoring policy of the network slice subnet from the MDAF device 105. The NSSMF device 103 is configured to obtain the performance assurance policy of the network slice subnet and/or the performance monitoring policy of the network slice subnet from the MDAF device 105.

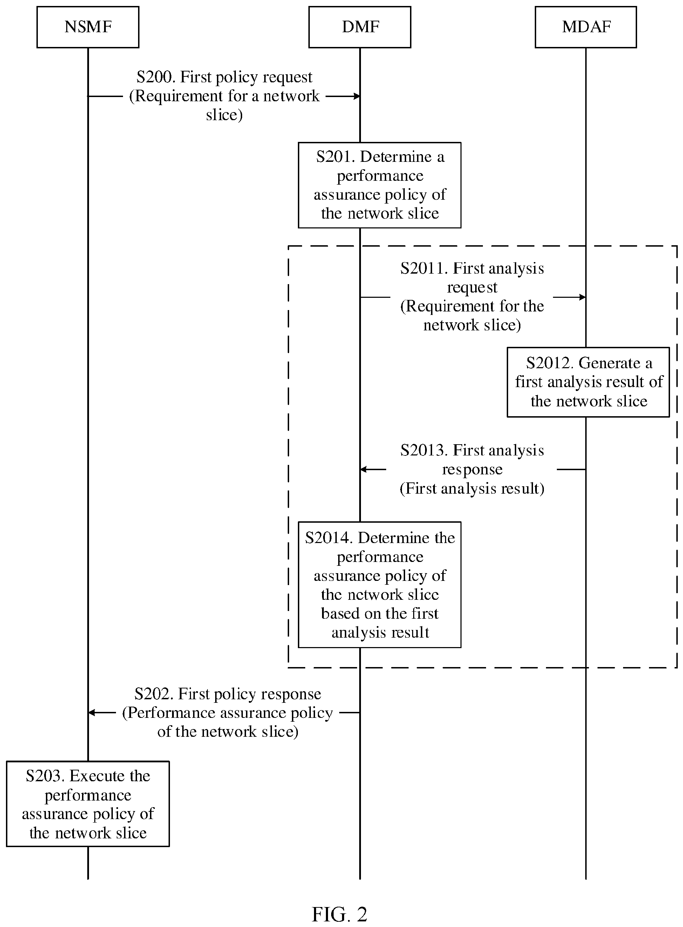

FIG. 2 shows a network slice management method according to an embodiment of this application. The method procedure is implemented based on the architecture shown in FIG. 1. An NSMF device corresponds to the NSMF device 102 in FIG. 1, an NSSMF device corresponds to the NSSMF device 103 in FIG. 1, a DMF device corresponds to the DMF device 104 in FIG. 1, and an MDAF device corresponds to the MDAF device 105 in FIG. 1. In the method, the NSMF device obtains a performance assurance policy of a network slice, and performs performance assurance on the network slice according to the performance assurance policy of the network slice. Specific steps are as follows:

S200. The NSMF device sends a first policy request to the DMF device, to request the performance assurance policy of the network slice.

The first policy request is used to request the performance assurance policy of the network slice. Specifically, the first policy request belongs to a message type used to request the performance assurance policy, and/or the first policy request carries indication information for requesting the performance assurance policy. The first policy request may carry an identifier of the network slice, for example, a single network slice selection assistance information (Single Network Slice Selection Assistance Information, S-NSSAI) and a network slice instance (Network Slice Instance, NSI) identifier (Identifier, ID).

The first policy request further carries a requirement for the network slice. The requirement for the network slice is specifically a service profile (Service Profile) or some or all performance indicators in the service profile. The performance indicator specifically includes a performance parameter and a value (including a value range) corresponding to the performance parameter. The requirement for the network slice may also be referred to as a performance requirement for the network slice.

S201. The DMF device determines the performance assurance policy of the network slice.

After receiving the first policy request, the DMF device determines the performance assurance policy of the network slice based on the requirement for the network slice in the first policy request. The requirement for the network slice may include one or more performance parameters. In this case, the performance assurance policy of the network slice may include an assurance policy for each performance parameter in the one or more performance parameters, or the performance assurance policy of the network slice is an overall performance assurance policy for all performance parameters or a part of main performance parameters in the one or more performance parameters. In another optional manner, the one or more performance parameters may be classified into a plurality of performance types such as a latency, a throughput, coverage, and a capacity. The performance assurance policy of the network slice may include an assurance policy for each performance type. In this case, the first policy request may further carry information about a performance type, to indicate to request an assurance policy for the performance type. In this case, the performance assurance policy of the network slice is an assurance policy of the network slice for the performance type. Table 1 specifically describes some performance parameters and performance types for reference. This is not limited in this application. DL represents downlink, and UL represents uplink.

**Table 1**

| Performance type | Performance parameter |
|---|---|
| Latency | DL/UL average latency; DL/UL maximum latency; DL/UL latency warning threshold; duration proportion of a DL/UL latency that exceeds a threshold; user quantity proportion of a DL/UL latency that exceeds a threshold; service flow proportion a DL/UL latency that exceeds a threshold; coverage proportion of a DL/UL latency that exceeds a threshold; DL/UL latency distribution by time segment; DL/UL latency distribution by coverage; DL/UL latency distribution by service type; and the like |
| Throughput | DL/UL throughput; DL/UL throughput threshold; duration proportion of a DL/UL throughput lower than a threshold; user quantity proportion of a DL/UL throughput lower than a threshold; service flow proportion of a DL/UL throughput lower than a threshold; coverage proportion of a DL/UL throughput lower than a threshold; DL/UL throughput distribution by time segment; DL/UL throughput distribution by coverage; DL/UL throughput distribution by service type; and the like |
| Capacity | Distribution of a user quantity/concurrent session quantity/radio resource control (Radio Resource Control, RRC) connection quantity by time segment; distribution of a user quantity/concurrent session quantity/RRC connection quantity by coverage; radio resource utilization threshold; virtual resource utilization threshold; distribution of radio resource utilization/virtual resource utilization by time segment; distribution of radio resource utilization/virtual resource utilization by coverage; and the like |
| Coverage | Cell coverage level distribution; mapping relationship between a DL/UL throughput or rate and a cell coverage level; coverage proportion information of an SLA fulfillment degree for a key performance indicator (Key Performance Indicator, KPI) combination; mapping relationship between a KPI combination and a cell coverage level; and the like |

Further, the DMF device determines the performance assurance policy of the network slice based on information such as the requirement for the network slice, a running-network situation, historical data, expert experience, planning information of the network slice, and/or a type of the network slice. The running-network situation may be information such as running-network measurement data, running-network load, and a running-network capability. For example, in terms of latency, the running-network situation may include an end-to-end latency, a RAN domain latency, a CN domain latency, and a TN domain latency that are reported through measurement in a running network, radio resource utilization and CPU resource utilization, and a radio resource, a CPU resource, a storage resource, a network bandwidth, and the like that can be further used for allocation in the running network. The historical data may be historical measurement data, a historical performance problem and a corresponding problem root cause, and the like. The expert experience (also referred to as experience data) is an experience base, a rule base, and the like that are formed by an expert (or may be a person skilled in the art) based on network optimization experience of the expert. The planning information of the network slice is a maximum capability planned for the network slice.

The following specifically describes the performance assurance policy of the network slice and how content in the performance assurance policy of the network slice is determined. The performance assurance policy of the network slice indicates a performance assurance operation on the network slice. It should be understood that the performance assurance policy is an example name, and may also be referred to as a performance assurance requirement, a performance assurance profile, a service level agreement (Service level agreement, SLA) assurance requirement, an SLA assurance policy, an SLA assurance profile, or the like. Specifically, the performance assurance policy of the network slice includes any one or more of the following, or includes information used to obtain any one or more of the following:
(1) A trigger condition is used to determine whether to continue to execute the performance assurance policy of the network slice.

Specifically, when the trigger condition is met, a performance problem occurs in the network slice, and the performance assurance policy of the network slice continues to be executed to perform performance assurance. When the trigger condition is not met, no performance problem occurs in the network slice, and the performance assurance policy of the network slice does not need to be continued to be executed.

That the trigger condition is met (that is, a performance problem occurs in the network slice) may specifically include one or more of the following: Performance measurement data of the network slice does not meet a first performance condition, performance measurement data of the network slice meets a second performance condition, a fault occurs in the network slice, and/or an alarm occurs in the network slice. An opposite case exists when the trigger condition is not met, and details are not described again.

The performance assurance policy of the network slice may specifically carry information such as the first performance condition or the second performance condition. The following first describes the first performance condition. The first performance condition is determined based on the requirement for the network slice. For example, if a latency requirement range in the requirement for the network slice is 6 ms to 12 ms, the first performance condition is that a maximum latency is not greater than 12 ms. When the maximum latency of the network slice exceeds 12 ms, the first performance condition is not met. In this case, the performance assurance policy continues to be executed to optimize the latency. Alternatively, the first performance condition may be determined based on the requirement for the network slice, the running-network situation, and/or the historical data. For example, an average latency requirement in the requirement for the network slice is 9 ms, an available resource in the running network is insufficient, and historical measurement data indicates that a resource is insufficient from 08:00 to 22:00 and a resource is sufficient from 23:00 to 07:00. Therefore, it is set that the time period from 08:00 to 22:00 corresponds to a first performance condition with a low requirement, that is, the maximum latency is not greater than 12 ms, and it is set that the time period from 23:00 to 07:00 corresponds to a first performance condition with a high requirement, that is, the maximum latency is not greater than 6 ms. Therefore, resources in different time periods are balanced to generally meet the requirement for the network slice. In the time period from 08:00 to 22:00, when the maximum latency of the network slice exceeds 12 ms, the first performance condition is not met. In this case, the performance assurance policy continues to be executed to optimize the latency. In the time period from 23:00 to 07:00, when the maximum latency of the network slice exceeds 6 ms, the first performance condition is not met. In this case, the performance assurance policy continues to be executed to optimize the latency. Alternatively, the first performance condition may be determined based on the planning information of the network slice. For example, when the network slice is provisioned, the first performance condition is set based on 60% of a capacity planned for the network slice. Generally, the condition is better than a capacity condition in the requirement for the network slice.

The second performance condition is similar to the first performance condition, and a difference lies in that setting logic is different. For example, for the second performance condition, it is set that the maximum latency is greater than 12 ms. In this case, when the maximum latency of the network slice exceeds 12 ms, the second performance condition is met. In this case, the performance assurance policy continues to be executed to optimize the latency.

It should be understood that the first performance condition and the second performance condition may be specifically a condition for a combination of any one or more performance parameters in Table 1.

(2) A problem root cause indicates a root cause of a performance problem of the network slice.

The performance assurance policy of the network slice may carry an instruction used to trigger obtaining of a problem root cause, and may further indicate a method for obtaining a problem root cause.

For example, the performance assurance policy of the network slice carries a correspondence between performance measurement data of the network slice and a problem root cause, to indicate to determine the problem root cause based on the correspondence. Specifically, when the performance assurance policy is executed subsequently, the corresponding problem root cause may be determined based on the performance measurement data of the network slice and the correspondence. In addition, the running-network situation may also be used as input, that is, the corresponding problem root cause may be determined based on the performance measurement data of the network slice, the running-network situation, and the correspondence. The correspondence may be specifically described by using a root cause database, a root cause determining model, or the like. The correspondence may be determined based on the historical data or the expert experience. In addition, the correspondence may be determined based on the requirement for the network slice. Therefore, the correspondence is customized for the network slice, to facilitate efficient root cause analysis on the network slice.

(3) A performance target indicates a target to be achieved by performance of the network slice.

The performance assurance policy of the network slice may carry an instruction used to trigger determining of a performance target, and may further indicate a method for determining a performance target. In this case, when the performance assurance policy of the network slice is executed subsequently, a proper performance target may be obtained based on the method for determining a performance target. For example, the performance assurance policy of the network slice specifically carries an algorithm used to determine a performance target. In the algorithm, information such as the requirement for the network slice, the problem root cause, and the running-network situation is used as input, and the performance target is used as output. The algorithm for determining a performance target may be determined based on the historical data and/or the expert experience. For example, the algorithm is a model that is used to determine a performance target and that is obtained through training by using the historical data.

It should be understood that the requirement for the network slice also belongs to the performance target of the network slice in a broad sense. The performance target in the performance assurance policy of the network slice is specifically a phased performance target, and the requirement for the network slice is an overall performance target. When the network slice is provisioned and in a running process of the network slice, the phased performance target may be dynamically determined based on the running-network situation (which is specifically, for example, a quantity of accessed users, resource utilization, and a resource availability status), so that the network slice generally can meet the requirement for the network slice.

(4) A management behavior indicates a behavior of managing the network slice and/or a network slice subnet of the network slice.

The performance assurance policy of the network slice may carry an instruction used to trigger determining of a management behavior and execution of the management behavior. The performance assurance policy of the network slice may further indicate a method for determining a management behavior. In this case, when the performance assurance policy of the network slice is executed subsequently, a proper management behavior may be obtained based on the method for determining a management behavior. For example, the performance assurance policy of the network slice carries a mapping table between a latency performance and a network resource. If a latency test result is that an average latency is greater than 8 ms, a management behavior determined based on the mapping table is adding 10% radio resource configuration and adding 10% core network CPU configuration, so that the average latency of the network slice is less than 8 ms. In addition, when the performance assurance policy of the network slice is executed subsequently, a proper management behavior may be determined based on the problem root cause, the performance target, and the method for determining a management behavior. The management behavior may be specifically adding or reducing resource configuration, modifying a topology of the network slice and/or modifying a topology of the network slice subnet of the network slice, and the like.

(5) A management notification indicates to notify a management device (namely, the NSSMF device) of the network slice subnet to execute a management behavior on the network slice subnet.

The performance assurance policy of the network slice carries an instruction used to trigger execution of the management notification. For example, if the management behavior determined in (4) is adding 10% radio resource configuration and adding 10% core network CPU configuration, the performance assurance policy of the network slice further triggers an operation of notifying a corresponding RAN NSSMF device and a corresponding CN NSSMF device to execute related configuration.

In an implementation, the DMF device may obtain information related to performance assurance on the network slice from another device, and further determine the performance assurance policy of the network slice based on the obtained information. The following describes, by using an example, a process in which the DMF device obtains a first analysis result of the network slice from the MDAF device based on the requirement for the network slice.

S2011. The DMF device sends a first analysis request to the MDAF device, to request the MDAF device to perform performance assurance analysis on the network slice.

The first analysis request is used to request to analyze the network slice. The first analysis request may carry the identifier of the network slice, and may further carry the requirement for the network slice. Specifically, the first analysis request is used to request to perform performance assurance analysis on the network slice. For example, the first analysis request belongs to a message type used to request performance assurance analysis, and/or the first analysis request carries indication information for requesting performance assurance analysis.

S2012. The MDAF device generates a first analysis result of the network slice.

After receiving the first analysis request, the MDAF device analyzes the network slice based on the requirement for the network slice, the running-network situation, the historical data, and/or the experience data, to generate the first analysis result (which is specifically a first analysis result of the performance assurance policy of the network slice) of the network slice. The first analysis result may be specifically one or more candidate performance assurance policies, for example, a plurality of performance assurance policies corresponding to different time periods. Alternatively, the first analysis result may include partial information in the performance assurance policy of the network slice. For example, the analysis result is the trigger condition, the problem root cause, and the management behavior in the performance assurance policy of the network slice. For a method for generating the first analysis result, refer to the foregoing description content of the information included in the performance assurance policy of the network slice. How various types of information are determined is also described in the content.

S2013. The MDAF device returns a first analysis response to the DMF device, where the first analysis response carries the first analysis result.

S2014. The DMF device determines the performance assurance policy of the network slice based on the first analysis result.

After receiving the first analysis result, the DMF device determines the performance assurance policy of the network slice based on the first analysis result. In an optional manner, the first analysis result includes partial information in the performance assurance policy of the network slice. In this case, the DMF device further determines remaining information such as the management notification, to determine the performance assurance policy of the network slice. In an optional manner, the first analysis result includes one candidate performance assurance policy. In this case, the DMF device determines the first analysis result as the performance assurance policy of the network slice, or the DMF device adjusts the first analysis result, and uses the adjusted first analysis result as the performance assurance policy of the network slice. In an optional manner, the first analysis result includes a plurality of candidate performance assurance policies. In this case, the DMF device may select one performance assurance policy from the plurality of candidate performance assurance policies as the performance assurance policy of the network slice. It should be understood that the plurality of candidate performance assurance policies included in the first analysis result are performance assurance policies for a plurality of performance types (or performance parameters). If the first analysis result includes one performance assurance policy for a latency and one performance assurance policy for coverage, the DMF device may directly use the plurality of candidate performance assurance policies as the performance assurance policy of the network slice, or the DMF device adjusts the plurality of candidate performance assurance policies, and uses the plurality of adjusted performance assurance policies as the performance assurance policy of the network slice.

In an optional manner, the DMF device may further obtain optimization information related to the network slice from a self-organizing network (Self-Organizing Network, SON) function device, and determine the performance assurance policy of the network slice based on the optimization information. The optimization information specifically includes an optimization policy, a policy execution status, and/or the like. For example, in a SON mobile load balancing scenario, the SON function device determines, based on a radio resource status, a quantity of users, and user distribution information of the running network, to modify a handover parameter to hand over some users to a neighboring cell. Because radio resource availability statuses and scheduling policies of different cells are different, service latencies of some users may change greatly. This may affect performance assurance on network slices related to these cells. Therefore, the DMF device obtains, from the SON function device, an optimization policy and a policy execution status of a cell related to the network slice. This helps consider a case on the SON function device side, and improve effectiveness of performance assurance.

It should be understood that the DMF device may determine the performance assurance policy of the network slice based on the first analysis result obtained from the MDAF device and the optimization information obtained from the SON function device. For example, the first analysis result is adjusted based on the optimization information, and the adjusted first analysis result is used as the performance assurance policy of the network slice.

S202. The DMF device returns a first policy response to the NSMF device, where the first policy response carries the performance assurance policy of the network slice.

The DMF device delivers the determined performance assurance policy of the network slice to the NSMF device.

S203. The NSMF device executes the performance assurance policy of the network slice.

After receiving the first policy response, the NSMF device stores the performance assurance policy of the network slice in the first policy response, and executes the performance assurance policy of the network slice (which may also mean performing performance assurance according to the performance assurance policy of the network slice).

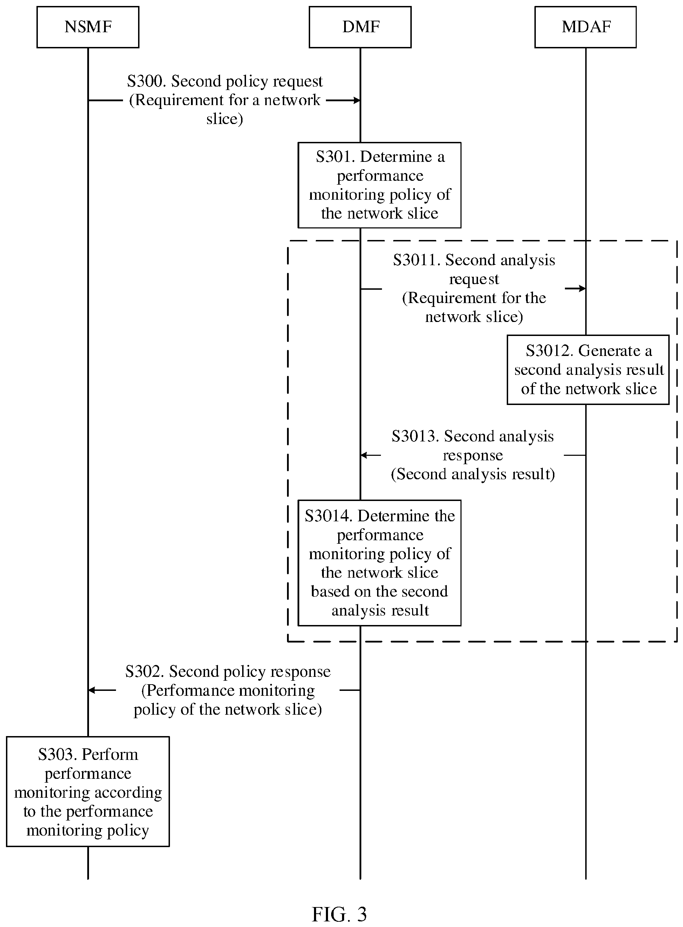

The following specifically describes how the NSMF device executes the performance assurance policy of the network slice.
(1) The NSMF device determines, periodically or in an event-triggered manner, whether the trigger condition in the performance assurance policy of the network slice is met. When the trigger condition is met, the NSMF device continues to execute the performance assurance policy of the network slice. When the trigger condition is not met, the NSMF device does not continue to execute the performance assurance policy of the network slice. A specific method includes one or more of the following:
   A. The NSMF device obtains the performance measurement data of the network slice periodically or in an event-triggered manner, and compares the performance measurement data with the first performance condition, to determine whether the first performance condition is met. If the performance measurement data does not meet the first performance condition (that is, if the trigger condition is met), the NSMF device continues to execute the performance assurance policy of the network slice. If the performance measurement data meets the first performance condition (that is, if the trigger condition is not met), the NSMF device does not continue to execute the performance assurance policy of the network slice. The second performance condition is similar to the first performance condition, and a difference lies in setting logic of the two conditions is different. If the performance measurement data meets the second performance condition (that is, if the trigger condition is met), the NSMF device continues to execute the performance assurance policy of the network slice. If the performance measurement data does not meet the second performance condition (that is, if the trigger condition is not met), the NSMF device does not continue to execute the performance assurance policy of the network slice. The performance measurement data may be obtained by the NSMF device from each network element device of the network slice and/or an element management system (Element Management System, EMS) of the network element device. In an optional manner, the performance measurement data may be obtained by the NSMF device by performing performance monitoring according to a performance monitoring policy. For a specific method, refer to the embodiment shown in FIG. 3.
   B. The NSMF device determines that a fault occurs in the network slice and/or an alarm occurs in the network slice, to determine that the trigger condition in the performance assurance policy of the network slice is met. For example, the NSMF device receives performance information, alarm information, and the like that are sent by a performance management (Performance Management, PM) function device and/or a fault management (Fault Management, FM) function device, to determine, based on the information, that a problem such as a fault or an alarm occurs in the network slice. In an optional manner, that a problem such as a fault or an alarm occurs in the network slice may be obtained by the NSMF device by performing performance monitoring according to a performance monitoring policy. For a specific method, refer to the embodiment shown in FIG. 3.
(2) The NSMF device determines the problem root cause.

The NSMF device determines the problem root cause based on the performance policy of the network slice.

Specifically, the NSMF device determines the problem root cause based on the instruction that is used to trigger obtaining of the problem root cause and that is in the performance policy of the network slice.

Optionally, the NSMF device determines the problem root cause based on the method that is for obtaining a problem root cause and that is indicated in the performance policy of the network slice. For example, if the performance policy of the network slice includes the correspondence between performance measurement data of the network slice and a problem root cause, the NSMF device determines the corresponding problem root cause based on the performance measurement data of the network slice and the correspondence. In addition, the NSMF device may further determine the problem root cause based on the running-network situation. For example, when the quantity of accessed users of the network slice increases, the latency increases. The NSMF device performs comprehensive determining based on the quantity of accessed users, the radio resource utilization, the CPU resource utilization, and the like, and determines, through analysis, that the root cause of the latency increase is a shortage of resources caused because the quantity of users increases to a degree, and consequently a time period in which some services or users wait for scheduling becomes longer.

In an optional manner, the NSMF device may further request the MDAF device to perform root cause analysis to obtain the problem root cause from the MDAF device. In an optional manner, the NSMF device may further obtain the problem root cause from the DMF device. The DMF device determines the problem root cause based on the performance measurement data of the network slice, the running-network situation, and the like, and returns the problem root cause to the NSMF device.

(3) The NSMF device determines a current performance target.

The NSMF device determines the current performance target based on the performance policy of the network slice.

Specifically, the NSMF device determines the performance target based on the instruction that is used to trigger determining of the performance target and that is in the performance policy of the network slice. Optionally, the NSMF device determines the current performance target based on the method that is for determining a performance target and that is indicated in the performance policy of the network slice. The NSMF device may further determine the current performance target based on the requirement for the network slice and the running-network situation. For example, the NSMF device first calculates, based on a latency requirement of the network slice, a user quantity of the network slice, an available resource case, and the like, a latency range that can be supported by the network slice, and then further determines a current latency target from the latency range.

In an optional manner, the NSMF device may further obtain a value of each performance parameter in the performance target from the MDAF device or the DMF device, to determine the performance target. The NSMF device may further obtain the optimization information related to the network slice from the SON function device, to adjust a value of each performance parameter based on the optimization information related to the network slice, so as to balance a final latency performance target.

(4) The NSMF determines the management behavior, and manages the network slice and/or the network slice subnet of the network slice based on the management behavior.

The NSMF device determines the management behavior based on the performance policy of the network slice, and executes the management behavior.

Specifically, the NSMF device determines the management behavior based on the instruction that is used to trigger determining of the management behavior and that is in the performance policy of the network slice. Optionally, the NSMF device determines the corresponding management behavior based on the method that is for determining a management behavior and that is indicated in the performance policy of the network slice. For example, the NSMF device determines the corresponding management behavior based on the problem root cause, the current performance target, and the method. In an optional manner, the NSMF device may further obtain the management behavior from the MDAF device or the DMF device. The NSMF device executes the determined management behavior, for example, adds or reduces resource configuration, and modifies a topology of the network slice and/or modifies a topology of the network slice subnet of the network slice.

(5) The NSMF device notifies the management device of the network slice subnet to execute the management behavior on the network slice subnet.

It should be understood that, for a specific method in which the NSMF device determines the problem root cause, the performance target, and the management behavior according to the performance assurance policy of the network slice, refer to descriptions in S201. Same content is not described again. In addition, the step of subsequently executing the performance assurance policy mentioned in S201 may be specifically performed by the NSMF device. In addition, in a performance assurance process, steps in (1) to (5) are not necessarily performed. For example, "determining the current performance target in (3)" may not be performed, and an execution sequence is not limited. For example, the current performance target may be determined before the problem root cause is determined. This is not limited in this application.

It should be understood that, in this embodiment of this application, a message name is an example name, and imposes no limitation. For example, the first policy request may also be referred to as a decision request, a requirement request, a performance assurance policy request, a performance assurance requirement request, or the like. The first analysis request may also be referred to as a policy analysis request, a performance assurance analysis request, or the like. The case is similar for the response message. Details are not described again.

It should be understood that the NSMF device may obtain the performance assurance policy of the network slice when the network slice is provisioned, or may update the performance assurance policy of the network slice in a running process of the network slice, for example, when the requirement for the network slice and/or the running-network situation change/changes. This embodiment of this application may be applied to these cases. When the performance assurance policy of the network slice is updated, the message name may change. For example, the first policy request in S200 may also be referred to as a first policy update request, and the first policy response in S202 may also be referred to as a first policy update response. Details are not described again.

In this embodiment of this application, the DMF device determines the performance assurance policy of the network slice, and delivers the performance assurance policy of the network slice to the NSMF device, so that the NSMF device performs performance assurance according to the performance assurance policy of the network slice, to implement performance assurance on the network slice. The performance assurance policy of the network slice facilitates automatic closed-loop performance assurance, and helps implement efficient and effective network slice management.

In another embodiment, the NSMF device determines the performance assurance policy of the network slice, and executes the performance assurance policy of the network slice. In this case, S200 and S202 may not be performed, and S201 is performed by the NSMF device. In addition, in S2011, the NSMF device sends the first analysis request to the MDAF device, and in S2013, the MDAF device sends the first analysis response to the NSMF device. In other words, in the foregoing embodiment, the DMF device is replaced with the NSMF device. For specific content, refer to the foregoing descriptions. Details are not described again. In this case, it may also be understood that the NSMF device and the DMF device are combined.

In another embodiment, the MDAF device determines the performance assurance policy of the network slice, and delivers the performance assurance policy of the network slice to the NSMF device, so that the NSMF device executes the performance assurance policy of the network slice. In this case, in S200, the NSMF device sends the first policy request to the MDAF device. In S201, the MDAF device determines the performance assurance policy of the network slice. S2011 and S2013 may not be performed. In S2014, the MDAF device determines the performance assurance policy of the network slice based on the first analysis result. In S202, the MDAF device sends the first policy response to the NSMF device. In other words, in the foregoing embodiment, the DMF device is replaced with the MDAF device. For specific content, refer to the foregoing descriptions. Details are not described again. In this case, it may also be understood that the MDAF device and the DMF device are combined.

S203 in the embodiment shown in FIG. 2 mentions specific content in which the NSMF device executes the performance assurance policy of the network slice. The NSMF device needs to collect information such as the performance measurement data of the network slice and/or the fault or the alarm of the network slice, to determine whether the trigger condition in the performance assurance policy of the network slice is met. In addition, the information such as the performance measurement data, the fault, and the alarm of the network slice may also be used to determine the problem root cause. Therefore, it is advantageous for the NSMF device to perform performance monitoring, to help efficiently and accurately collect the information such as the performance measurement data, the fault, and the alarm of the network slice, so as to better execute the performance assurance policy of the network slice. FIG. 3 shows a network slice management method according to an embodiment of this application. The method procedure is implemented based on the architecture shown in FIG. 1. An NSMF device corresponds to the NSMF device 102 in FIG. 1, an NSSMF device corresponds to the NSSMF device 103 in FIG. 1, a DMF device corresponds to the DMF device 104 in FIG. 1, and an MDAF device corresponds to the MDAF device 105 in FIG. 1. In the method, the NSMF device obtains a performance monitoring policy of a network slice, and performs performance monitoring on the network slice according to the performance monitoring policy of the network slice. Specific steps are as follows:

S300. The NSMF device sends a second policy request to the DMF device, to request the performance monitoring policy of the network slice.

The second policy request is used to request the performance monitoring policy of the network slice. Specifically, the second policy request belongs to a message type used to request the performance monitoring policy, and/or the second policy request carries indication information for requesting the performance monitoring policy. The second policy request may specifically carry an identifier of the network slice, and may further carry a requirement for the network slice.

S301. The DMF device determines the performance monitoring policy of the network slice.

After receiving the second policy request, the DMF device determines the performance monitoring policy of the network slice based on the requirement for the network slice in the second policy request. The requirement for the network slice may include one or more performance parameters, and the performance monitoring policy of the network slice may include a monitoring policy for each performance parameter in the one or more performance parameters, or an overall monitoring policy for all performance parameters or a part of main performance parameters in the one or more performance parameters, or a monitoring policy for one or more performance types. Specific content is similar to the performance assurance policy described in S201, and references may be made to the descriptions in S201.

Further, the DMF device determines the performance monitoring policy of the network slice based on information such as the requirement for the network slice, a running-network situation, and/or historical data. The following specifically describes the performance monitoring policy of the network slice and how content in the performance monitoring policy of the network slice is determined. The performance monitoring policy of the network slice indicates a performance monitoring operation on the network slice. It should be understood that the performance monitoring policy of the network slice may also be referred to as a performance monitoring requirement, a performance measurement requirement, a performance measurement policy, a performance monitoring profile, or the like of the network slice. This is not limited in this application. The performance monitoring policy of the network slice is used as an example for description. The performance monitoring policy of the network slice includes any one or more of the following, or includes information used to obtain any one or more of the following:
(1) A monitored object indicates a monitored performance parameter. For a specific performance parameter, refer to the performance parameter in Table 1 in the embodiment in FIG. 2. The monitored object may be specifically determined based on the requirement for the network slice. A device that performs performance monitoring obtains corresponding performance measurement data based on the monitored object. The performance monitoring policy of the network slice may further indicate a method for obtaining performance measurement data corresponding to a monitored object, for example, request the MDAF device to analyze performance information reported by each network element device.
(2) A monitoring period indicates a performance monitoring (or performance measurement) period. A granularity of the monitoring period may be specifically a millisecond, a second, a minute, or the like. The monitoring period may be determined based on the running-network situation. For example, when a resource in a running network is insufficient, the determined monitoring period is long (for example, one minute), to prevent more resources from being occupied by excessive measurement and analysis. When a resource in a running network is sufficient, the determined monitoring period is short (for example, 0.5 minutes). In addition, the monitoring period may be determined based on a network slice type or a service type of the network slice. For example, for a network slice of a URLLC type or a network slice that serves a low-latency service, the determined monitoring period is short, to prevent an abnormal latency from being not measured due to an excessively long monitoring period.
(3) A start condition indicates a condition for starting performance monitoring. The condition may be specifically that a request for starting performance monitoring is received, the network slice is provisioned or activated, or the like.
(4) A stop condition indicates a condition for stopping performance monitoring. The condition may be specifically that a request for stopping performance monitoring is received, the network slice is out-of-service or deactivated, or the like.
(5) A monitoring event, namely, a triggering event during monitoring, may be used to trigger an operation such as reporting performance measurement data of the network slice, determine that a fault occurs in the network slice, report fault information of the network slice, determine that an alarm occurs in the network slice, report alarm information of the network slice, and/or execute a performance assurance policy of the network slice.

A specific operation above that is triggered by the monitoring event may be determined by the DMF device, and the performance monitoring policy of the network slice carries indication information of an operation triggered by the monitoring event.

That the monitoring event is detected (which may also mean that the monitoring event is met) may be specifically that the performance measurement data of the network slice does not meet a first monitoring performance condition, or the performance measurement data of the network slice meets a second monitoring performance condition, or the like. The first monitoring performance condition and the second monitoring performance condition may specifically correspond to preset thresholds of one or more performance parameters. For details of the performance parameter, refer to Table 1 in the embodiment in FIG. 2. Details are not described herein again. A difference between the first monitoring performance condition and the second monitoring performance condition lies in that setting logic is different. For example, if the first monitoring performance condition is that a maximum latency is not greater than 12 ms, when a measured maximum latency of the network slice exceeds 12 ms, the first monitoring performance condition is not met, that is, the monitoring event is met. If the second monitoring performance condition is that a maximum latency is greater than 12 ms, when a measured maximum latency of the network slice exceeds 12 ms, the second monitoring performance condition is met, that is, the monitoring event is met. The performance monitoring policy of the network slice may carry the first monitoring performance condition and/or the second monitoring performance condition.

The first monitoring performance condition and/or the second monitoring performance condition may be specifically determined based on the requirement for the network slice. Further, the monitoring event may be determined based on the running-network situation, the historical data, and/or the like. For details, refer to the similar descriptions of determining the first performance condition in S201. Details are not described again.

That the monitoring event may be further used to trigger execution of the performance assurance policy of the network slice is specifically described below. For example, when detecting the monitoring event, the NSMF device that performs performance monitoring executes the performance assurance policy of the network slice. In this case, the NSMF device may determine, based on a trigger condition in the performance assurance policy of the network slice, whether to continue to execute the performance assurance policy of the network slice, or may not perform the determining action, but directly obtains a problem root cause, determines a performance target, or the like. Therefore, the monitoring event in the performance monitoring policy of the network slice may include the trigger condition in the performance assurance policy of the network slice. This is not limited in this application.

In an implementation, the DMF device may obtain information related to performance monitoring on the network slice from another device (such as the MDAF device or a SON function device), and further determine the performance monitoring policy of the network slice based on the obtained information. The following describes, by using an example, a process in which the DMF device obtains a second analysis result of the network slice from the MDAF device based on the requirement for the network slice.

S3011. The DMF device sends a second analysis request to the MDAF device, to request the MDAF device to perform performance monitoring analysis on the network slice.

Details are not described again. For details, refer to S2011, where performance assurance is replaced with performance monitoring, and the first analysis request is replaced with the second analysis request.

S3012. The MDAF device generates a second analysis result of the network slice.

The MDAF device analyzes the network slice based on the requirement for the network slice, the running-network situation, the historical data, and/or the experience data, to generate the second analysis result (which is specifically a second analysis result of the performance monitoring policy of the network slice) of the network slice. Details are not described again. For details, refer to S2012, where performance assurance is replaced with performance monitoring, and the first analysis result is replaced with the second analysis result.

S3013. The MDAF device returns a second analysis response to the DMF device, where the second analysis response carries the second analysis result.

S3014. The DMF device determines the performance monitoring policy of the network slice based on the second analysis result.

Details are not described again. For details, refer to S2014, where performance assurance is replaced with performance monitoring, and the first analysis result is replaced with the second analysis result.

In an optional manner, the DMF device may further obtain optimization information related to the network slice from the SON function device, and determine the performance monitoring policy of the network slice based on the optimization information. Alternatively, the DMF device determines the performance monitoring policy of the network slice based on the second analysis result obtained from the MDAF device and the optimization information obtained from the SON function device. Details are not described again. For details, refer to S201, where performance assurance is replaced with performance monitoring.

S302. The DMF device returns a second policy response to the NSMF device, where the second policy response carries the performance monitoring policy of the network slice.

S303. The NSMF device performs performance monitoring according to the performance monitoring policy of the network slice.

After receiving the second policy response, the NSMF device stores the performance monitoring policy of the network slice in the second policy response, and performs performance monitoring (which may also mean executing the performance monitoring policy of the network slice) according to the performance monitoring policy of the network slice.

The following specifically describes how the NSMF device performs performance monitoring.

The NSMF device periodically obtains, based on the monitoring period in the performance monitoring policy of the network slice, the performance measurement data corresponding to the monitored object. When the start condition in the performance monitoring policy of the network slice is met, the NSMF device may further obtain the performance measurement data corresponding to the monitored object. Specifically, the NSMF device obtains performance information, alarm information, and the like of each network element device of the network slice from a PM function device and/or an FM function device, and performs aggregation processing on the performance information and the alarm information of each network element device based on a network slice granularity, to obtain the performance measurement data corresponding to the monitored object of the network slice. Optionally, the NSMF device may further obtain, from the MDAF device, the performance measurement data corresponding to the monitored object of the network slice. In this case, the MDAF device obtains performance information, alarm information, and the like of each network element device of the network slice from a PM function device and/or an FM function device, performs aggregation processing on the performance information and the alarm information of each network element device based on a network slice granularity, and then sends the information to the NSMF device. Optionally, the PM function device and/or the FM function device may perform aggregation processing on the performance information and the alarm information of each network element device of the network slice based on the network slice granularity, so that the NSMF device obtains the performance measurement data of the network slice from the PM function device and/or the FM function device.

The NSMF device determines, based on the obtained performance measurement data of the network slice, whether the monitoring event in the performance monitoring policy of the network slice is met. If the monitoring event is met (that is, if the corresponding monitoring event is detected), the NSMF device further performs one or more of the following operations: reporting the performance measurement data of the network slice, determining that a fault occurs in the network slice, reporting the fault information of the network slice, determining that an alarm occurs in the network slice, reporting the alarm information of the network slice, and/or executing the performance assurance policy of the network slice.

In an optional manner, the NSMF device executes the performance assurance policy of the network slice based on a performance monitoring result of the network slice. Specifically, when detecting the monitoring event in the performance monitoring policy of the network slice, the NSMF device executes the performance assurance policy of the network slice. The NSMF device determines the problem root cause and the like in the performance assurance policy based on the performance measurement data, the fault information, the alarm information, and/or the like of the network slice. For details, refer to the descriptions in the embodiment shown in FIG. 2. Details are not described again. It should be understood that the performance monitoring result of the network slice may be specifically the met monitoring event, the performance measurement data, the fault information, the alarm information, and/or the like of the network slice.

In addition, when the stop condition in the performance monitoring policy of the network slice is met, the NSMF device stops performance monitoring.

It should be understood that, in this embodiment of this application, a message name is an example name, and imposes no limitation. For example, the second policy request may also be referred to as a decision request, a requirement request, a performance monitoring policy request, a performance monitoring requirement request, or the like. The second analysis request may also be referred to as a policy analysis request, a performance monitoring analysis request, or the like. The case is similar for the response message. Details are not described again.

It should be understood that the NSMF device may obtain the performance monitoring policy of the network slice when the network slice is provisioned, or may update the performance monitoring policy of the network slice in a running process of the network slice, for example, when the requirement for the network slice and/or the running-network situation change/changes. This embodiment of this application may be applied to these cases. When the performance monitoring policy of the network slice is updated, the message name may change. For example, the second policy request in S300 may also be referred to as a second policy update request, and the second policy response in S302 may also be referred to as a second policy update response. Details are not described again.

In an optional manner, the NSMF device may request the performance assurance policy of the network slice from the DMF device and the performance monitoring policy of the network slice from the DMF device by using a same message. For example, the first policy request in the embodiment shown in FIG. 2 and the second policy request in this embodiment of this application are a same request message, and the request message is used to request both the performance assurance policy and the performance monitoring policy. Similarly, the first analysis request and the second analysis request may also be a same request message, and the request message is used to request to analyze both the performance assurance policy and the performance monitoring policy. The first analysis response and the second analysis response may also be a same response message, and the response message carries both the first analysis result of the performance assurance policy of the network slice and the second analysis result of the performance monitoring policy of the network slice. The first policy response and the second policy response may also be a same response message, and the response message carries both the performance assurance policy of the network slice and the performance monitoring policy of the network slice.

In another optional manner, the NSMF device may first request the performance assurance policy of the network slice, and then request the performance monitoring policy of the network slice. For example, S200 in the embodiment shown in FIG. 2 is performed before S300 in the embodiment shown in FIG. 3. In still another optional manner, the NSMF device may first request the performance monitoring policy of the network slice, and then request the performance assurance policy of the network slice. For example, S200 in the embodiment shown in FIG. 2 is performed after S300 in the embodiment shown in FIG. 3.

In this embodiment of this application, the DMF device determines the performance monitoring policy of the network slice, and delivers the performance monitoring policy of the network slice to the NSMF device, so that the NSMF device performs performance monitoring according to the performance monitoring policy of the network slice. This helps effectively monitor a running status of the network slice, and discover a performance problem in a timely manner, to implement efficient and effective network slice management.

In another embodiment, the NSMF device determines the performance monitoring policy of the network slice, and executes the performance monitoring policy of the network slice. In this case, S300 and S302 may not be performed, and S301 is performed by the NSMF device. In addition, in S3011, the NSMF device sends the second analysis request to the MDAF device, and in S3013, the MDAF device sends the second analysis response to the NSMF device. In other words, in the foregoing embodiment, the DMF device is replaced with the NSMF device. For specific content, refer to the foregoing descriptions. Details are not described again. In this case, it may also be understood that the NSMF device and the DMF device are combined.

In another embodiment, the MDAF device determines the performance monitoring policy of the network slice, and delivers the performance monitoring policy of the network slice to the NSMF device, so that the NSMF device executes the performance monitoring policy of the network slice. In this case, in S300, the NSMF device sends the second policy request to the MDAF device. In S301, the MDAF device determines the performance monitoring policy of the network slice. S3011 and S3013 may not be performed. In S3014, the MDAF device determines the performance monitoring policy of the network slice based on the second analysis result. In S302, the MDAF device sends the second policy response to the NSMF device. In other words, in the foregoing embodiment, the DMF device is replaced with the MDAF device. For specific content, refer to the foregoing descriptions. Details are not described again. In this case, it may also be understood that the MDAF device and the DMF device are combined.

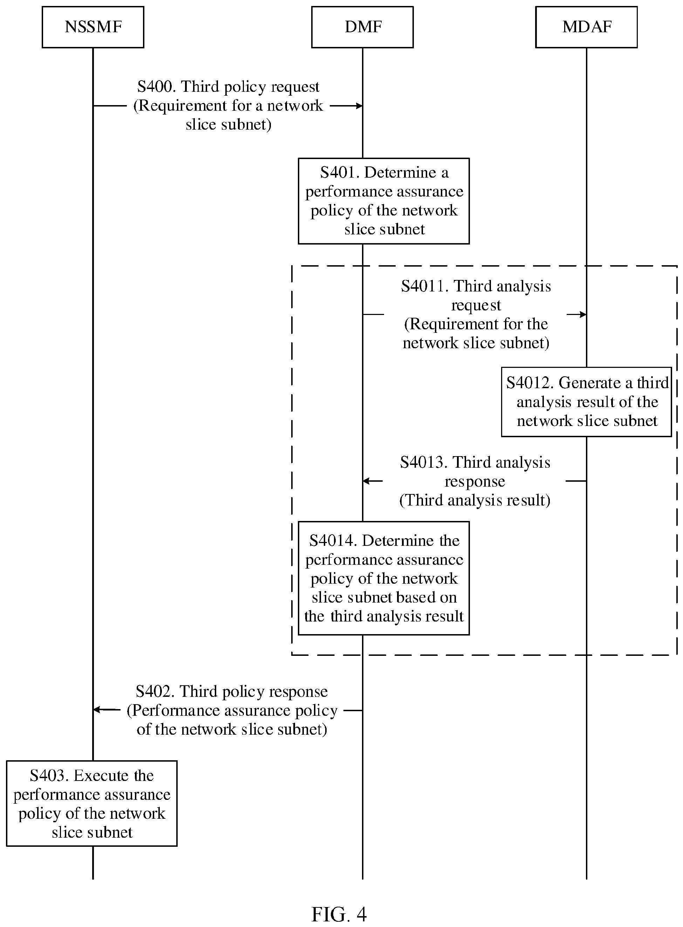

FIG. 4 shows a network slice subnet management method according to an embodiment of this application. The method procedure is implemented based on the architecture shown in FIG. 1. An NSMF device corresponds to the NSMF device 102 in FIG. 1, an NSSMF device corresponds to the NSSMF device 103 in FIG. 1, a DMF device corresponds to the DMF device 104 in FIG. 1, and an MDAF device corresponds to the MDAF device 105 in FIG. 1. In the method, the NSSMF device obtains a performance assurance policy of a network slice subnet, and performs performance assurance on the network slice subnet according to the performance assurance policy of the network slice subnet. Specific steps are as follows:
S400. The NSSMF device sends a third policy request to the DMF device, to request the performance assurance policy of the network slice subnet.

For specific content, refer to S200 in the embodiment shown in FIG. 2, where the network slice is replaced with the network slice subnet. Details are not described again. A requirement for the network slice subnet is specifically a slice profile (Slice Profile) or some or all performance indicators in the slice profile. An identifier of the network slice subnet may be specifically an NSSI ID, an S-NSSAI, or a combination of an S-NSSAI and an NSSI ID.

S401. The DMF device determines the performance assurance policy of the network slice subnet.

For specific content, refer to S201 in the embodiment shown in FIG. 2, where the network slice is replaced with the network slice subnet. Details are not described again. A management notification in the performance assurance policy of the network slice subnet indicates to notify a network element management function device (such as an EMS) to execute a management behavior on a network element of the network slice subnet. Alternatively, a management notification in the performance assurance policy of the network slice subnet indicates to notify a network function management function device to execute a management behavior on a network function of the network slice subnet. It should be understood that the network element management function device includes the network function management function device, and the network element includes the network function.

In an implementation, the DMF device may obtain information related to performance assurance on the network slice subnet from another device, and further determine the performance assurance policy of the network slice subnet based on the obtained information. The following describes, by using an example, a process in which the DMF device obtains a third analysis result of the network slice subnet from the MDAF device based on the requirement for the network slice subnet.

S4011. The DMF device sends a third analysis request to the MDAF device, to request the MDAF device to perform performance assurance analysis on the network slice subnet.

Details are not described again. For details, refer to S2011, where the network slice is replaced with the network slice subnet, and the first analysis request is replaced with the third analysis request.

S4012. The MDAF device generates a third analysis result of the network slice subnet.

Details are not described again. For details, refer to S2012, where the network slice is replaced with the network slice subnet, and the first analysis result is replaced with the third analysis result.

S4013. The MDAF device returns a third analysis response to the DMF device, where the third analysis response carries the third analysis result.

S4014. The DMF device determines the performance assurance policy of the network slice subnet based on the third analysis result.

Details are not described again. For details, refer to S2014, where the network slice is replaced with the network slice subnet, and the first analysis result is replaced with the third analysis result.

In an optional manner, the DMF device may further obtain optimization information related to the network slice subnet from a SON function device, and determine the performance assurance policy of the network slice subnet based on the optimization information. In another optional manner, the DMF device may determine the performance assurance policy of the network slice subnet based on the third analysis result obtained from the MDAF device and the optimization information obtained from the SON function device. Details are not described again. For details, refer to S201, where the network slice is replaced with the network slice subnet.

S402. The DMF device returns a third policy response to the NSSMF device, where the third policy response carries the performance assurance policy of the network slice subnet.

The DMF device delivers the determined performance assurance policy of the network slice subnet to the NSSMF device.

S403. The NSSMF device executes the performance assurance policy of the network slice subnet.

Details are not described again. For details, refer to S203, where the network slice is replaced with the network slice subnet. The NSSMF device may further notify the network element management function device to execute the management behavior on the network element of the network slice subnet.

In an optional method, after receiving the third policy response, the NSSMF device may further send the performance assurance policy of the network slice subnet to the NSMF device. Therefore, the NSMF device can receive performance assurance policies that are of network slice subnets of a same network slice and that are sent by a plurality of NSSMF devices. For example, one network slice includes a plurality of network slice subnets such as a RAN network slice subnet, a TN network slice subnet, and a CN network slice subnet. In this case, a RAN NSSMF device sends a performance assurance policy of the RAN network slice subnet to the NSMF device, a TN NSSMF device sends a performance assurance policy of the TN network slice subnet to the NSMF device, and a CN NSSMF device sends a performance assurance policy of the CN network slice subnet to the NSMF device. The NSMF device may store the performance assurance policies of these network slice subnets. Optionally, the NSMF device may further adjust the received performance assurance policy of the network slice subnet. For example, the NSMF device adjusts the performance assurance policy of each network slice subnet of the network slice according to a performance assurance policy of the network slice. For another example, the NSMF device adjusts the performance assurance policy of each network slice subnet of the network slice based on a requirement for the network slice and/or performance measurement data of the network slice. The NSMF device further sends the adjusted performance assurance policy of the network slice subnet to a corresponding NSSMF device, for example, sends the adjusted performance assurance policy of the RAN network slice subnet to the RAN NSSMF device. In this case, the NSSMF device receives the adjusted performance assurance policy of the network slice subnet, and executes the adjusted performance assurance policy of the network slice subnet. Details are not described again. Because the NSMF device can obtain end-to-end measurement data of the network slice, and may further coordinate resources in all domains by comprehensively considering a cross-domain requirement, a cross-domain status, and a requirement and a status of each single domain, so that the adjusted performance assurance policy of the network slice subnet is more proper, to facilitate performance assurance on the network slice.

It should be understood that the NSSMF device may obtain the performance assurance policy of the network slice subnet when the network slice subnet is provisioned, or may update the performance assurance policy of the network slice subnet in a running process of the network slice subnet, for example, when the requirement for the network slice subnet and/or the running-network situation change/changes. This embodiment of this application may be applied to these cases. When the performance assurance policy of the network slice subnet is updated, the message name may change. For example, the third policy request in S400 may also be referred to as a third policy update request, and the third policy response in S402 may also be referred to as a third policy update response. Details are not described again.

In another embodiment, the NSSMF device determines the performance assurance policy of the network slice subnet, and executes the performance assurance policy of the network slice subnet. In this case, S400 and S402 may not be performed, and S401 is performed by the NSSMF device. In addition, in S4011, the NSSMF device sends the third analysis request to the MDAF device, and in S4013, the MDAF device sends the third analysis response to the NSSMF device. In other words, in the foregoing embodiment, the DMF device is replaced with the NSSMF device. For specific content, refer to the foregoing descriptions. Details are not described again. In this case, it may also be understood that the NSSMF device and the DMF device are combined.

In another embodiment, the MDAF device determines the performance assurance policy of the network slice subnet, and delivers the performance assurance policy of the network slice subnet to the NSSMF device, so that the NSSMF device executes the performance assurance policy of the network slice subnet. In this case, in S400, the NSSMF device sends the third policy request to the MDAF device. In S401, the MDAF device determines the performance assurance policy of the network slice subnet. S4011 and S4013 may not be performed. In S4014, the MDAF device determines the performance assurance policy of the network slice subnet based on the third analysis result. In S402, the MDAF device sends the third policy response to the NSSMF device. In other words, in the foregoing embodiment, the DMF device is replaced with the MDAF device. For specific content, refer to the foregoing descriptions. Details are not described again. In this case, it may also be understood that the MDAF device and the DMF device are combined.

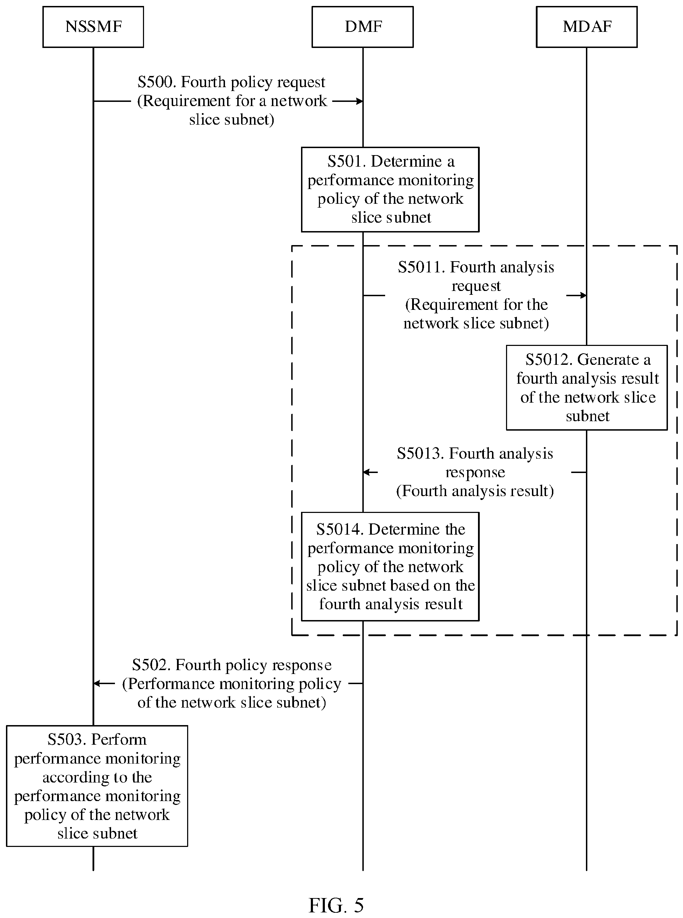

FIG. 5 shows a network slice subnet management method according to an embodiment of this application. The method procedure is implemented based on the architecture shown in FIG. 1. An NSMF device corresponds to the NSMF device 102 in FIG. 1, an NSSMF device corresponds to the NSSMF device 103 in FIG. 1, a DMF device corresponds to the DMF device 104 in FIG. 1, and an MDAF device corresponds to the MDAF device 105 in FIG. 1. In the method, the NSSMF device obtains a performance monitoring policy of a network slice subnet, and performs performance monitoring on the network slice subnet according to the performance monitoring policy of the network slice subnet. Specific steps are as follows:
S500. The NSSMF device sends a fourth policy request to the DMF device, to request the performance monitoring policy of the network slice subnet.

For specific content, refer to S300 in the embodiment shown in FIG. 3, where the network slice is replaced with the network slice subnet, and the second policy request is replaced with the fourth policy request. Details are not described again.

S501. The DMF device determines the performance monitoring policy of the network slice subnet.

For specific content, refer to S301 in the embodiment shown in FIG. 3, where the network slice is replaced with the network slice subnet, and the NSMF device is replaced with the NSSMF device. Details are not described again.

In an implementation, the DMF device may obtain information related to performance monitoring on the network slice subnet from another device (such as the MDAF device or a SON function device), and further determine the performance monitoring policy of the network slice subnet based on the obtained information. The following describes, by using an example, a process in which the DMF device obtains a fourth analysis result of the network slice subnet from the MDAF device based on the requirement for the network slice subnet.

S5011. The DMF device sends a fourth analysis request to the MDAF device, to request the MDAF device to perform performance monitoring analysis on the network slice subnet.

For specific content, refer to S3011 in the embodiment shown in FIG. 3, where the network slice is replaced with the network slice subnet, and the second analysis request is replaced with the fourth analysis request. Details are not described again.

S5012. The MDAF device generates a fourth analysis result of the network slice subnet.

For specific content, refer to S3012 in the embodiment shown in FIG. 3, where the network slice is replaced with the network slice subnet, and the second analysis result is replaced with the fourth analysis result. Details are not described again.

S5013. The MDAF device returns a fourth analysis response to the DMF device, where the fourth analysis response carries the fourth analysis result.

S5014. The DMF device determines the performance monitoring policy of the network slice subnet based on the fourth analysis result.

Details are not described again. For details, refer to S2014, where performance assurance is replaced with performance monitoring, and the first analysis result is replaced with the fourth analysis result.

In an optional manner, the DMF device may further obtain optimization information related to the network slice subnet from the SON function device, and determine the performance monitoring policy of the network slice subnet based on the optimization information. Alternatively, the DMF device determines the performance monitoring policy of the network slice subnet based on the fourth analysis result obtained from the MDAF device and the optimization information obtained from the SON function device. Details are not described again. For details, refer to S201, where performance assurance is replaced with performance monitoring.

S502. The DMF device returns a fourth policy response to the NSSMF device, where the fourth policy response carries the performance monitoring policy of the network slice subnet.

S503. The NSSMF device executes the performance monitoring policy of the network slice subnet.

For specific content, refer to S303 in the embodiment shown in FIG. 3, where the network slice is replaced with the network slice subnet, and the NSMF device is replaced with the NSSMF device. Details are not described again.

In an optional method, after receiving the fourth policy response, the NSSMF device may further send the performance monitoring policy of the network slice subnet to the NSMF device. Therefore, the NSMF device can receive performance monitoring policies that are of network slice subnets of a same network slice and that are sent by a plurality of NSSMF devices. The NSMF device may store the performance monitoring policies of these network slice subnets. Optionally, the NSMF device may further adjust the received performance monitoring policy of the network slice subnet. For example, the NSMF device adjusts the performance monitoring policy of each network slice subnet of the network slice according to a performance monitoring policy of the network slice. For another example, the NSMF device adjusts the performance monitoring policy of each network slice subnet of the network slice based on a requirement for the network slice and/or performance measurement data of the network slice. The NSMF device further sends the adjusted performance monitoring policy of the network slice subnet to a corresponding NSSMF device, for example, sends an adjusted performance monitoring policy of a RAN network slice subnet to a RAN NSSMF device. In this case, the NSSMF device receives the adjusted performance monitoring policy of the network slice subnet, and executes the adjusted performance monitoring policy of the network slice subnet. For specific content, refer to the embodiment shown in FIG. 4, where the performance assurance is replaced with performance monitoring. Details are not described again.

In an optional manner, the NSSMF device may request the performance assurance policy of the network slice subnet from the DMF device and the performance monitoring policy of the network slice subnet from the DMF device by using a same message. For example, the third policy request in the embodiment shown in FIG. 4 and the fourth policy request in this embodiment of this application are a same request message, and the request message is used to request both the performance assurance policy and the performance monitoring policy. Similarly, the third analysis request and the fourth analysis request may also be a same request message, and the request message is used to request to analyze both the performance assurance policy and the performance monitoring policy. The third analysis response and the fourth analysis response may also be a same response message, and the response message carries both the third analysis result of the performance assurance policy of the network slice subnet and the fourth analysis result of the performance monitoring policy of the network slice subnet. The third policy response and the fourth policy response may also be a same response message, and the response message carries both the performance assurance policy of the network slice subnet and the performance monitoring policy of the network slice subnet.

In another optional manner, the NSSMF device may first request the performance assurance policy of the network slice subnet, and then request the performance monitoring policy of the network slice subnet. For example, S400 in the embodiment shown in FIG. 4 is performed before S500 in the embodiment shown in FIG. 5. In still another optional manner, the NSSMF device may first request the performance monitoring policy of the network slice subnet, and then request the performance assurance policy of the network slice subnet. For example, S400 in the embodiment shown in FIG. 4 is performed after S500 in the embodiment shown in FIG. 5.

It should be understood that the NSSMF device may obtain the performance monitoring policy of the network slice subnet when the network slice subnet is provisioned, or may update the performance monitoring policy of the network slice subnet in a running process of the network slice subnet, for example, when the requirement for the network slice subnet and/or the running-network situation change/changes. This embodiment of this application may be applied to these cases. When the performance monitoring policy of the network slice subnet is updated, the message name may change. For example, the fourth policy request in S500 may also be referred to as a fourth policy update request, and the fourth policy response in S502 may also be referred to as a fourth policy update response. Details are not described again.

In another embodiment, the NSSMF device determines the performance monitoring policy of the network slice subnet, and executes the performance monitoring policy of the network slice subnet. In this case, S500 and S502 may not be performed, and S501 is performed by the NSSMF device. In addition, in S5011, the NSSMF device sends the fourth analysis request to the MDAF device, and in S5013, the MDAF device sends the fourth analysis response to the NSSMF device. In other words, in the foregoing embodiment, the DMF device is replaced with the NSSMF device. For specific content, refer to the foregoing descriptions. Details are not described again. In this case, it may also be understood that the NSSMF device and the DMF device are combined.

In another embodiment, the MDAF device determines the performance monitoring policy of the network slice subnet, and delivers the performance monitoring policy of the network slice subnet to the NSSMF device, so that the NSSMF device executes the performance monitoring policy of the network slice subnet. In this case, in S500, the NSSMF device sends the fourth policy request to the MDAF device. In S501, the MDAF device determines the performance monitoring policy of the network slice subnet. S5011 and S5013 may not be performed. In S5014, the MDAF device determines the performance monitoring policy of the network slice subnet based on the fourth analysis result. In S502, the MDAF device sends the fourth policy response to the NSSMF device. In other words, in the foregoing embodiment, the DMF device is replaced with the MDAF device. For specific content, refer to the foregoing descriptions. Details are not described again. In this case, it may also be understood that the MDAF device and the DMF device are combined.

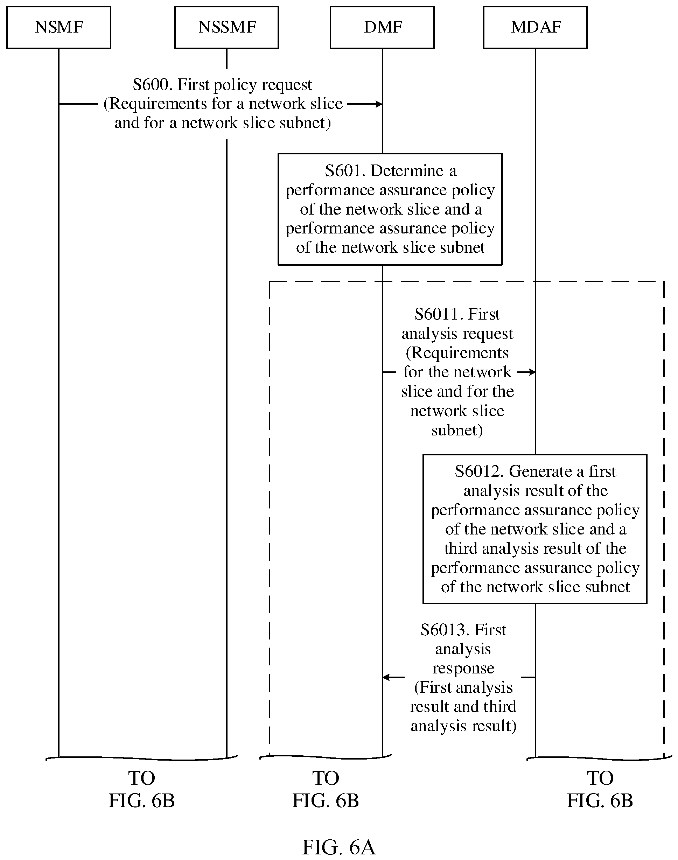

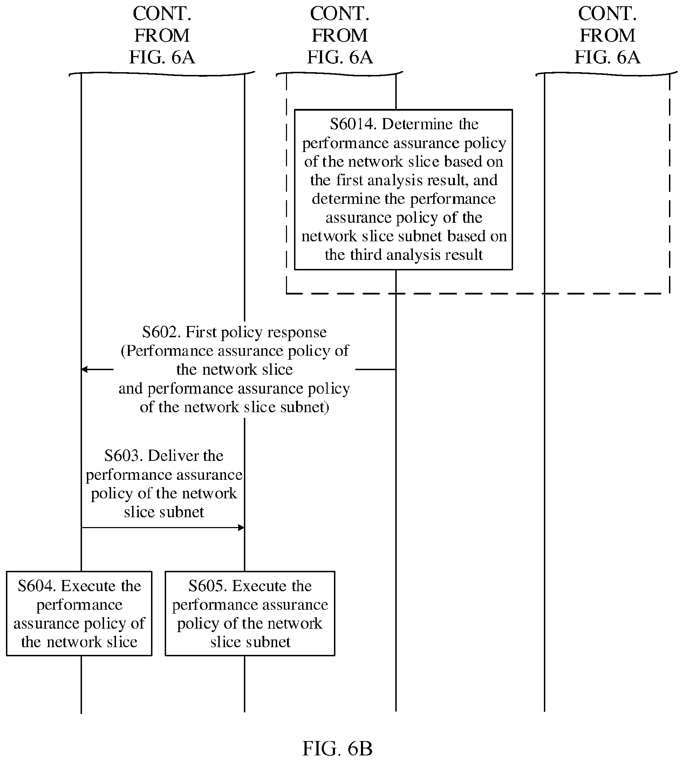

FIG. 6A and FIG. 6B show a network slice and network slice subnet management method according to an embodiment of this application. The method procedure is implemented based on the architecture shown in FIG. 1. An NSMF device corresponds to the NSMF device 102 in FIG. 1, an NSSMF device corresponds to the NSSMF device 103 in FIG. 1, a DMF device corresponds to the DMF device 104 in FIG. 1, and an MDAF device corresponds to the MDAF device 105 in FIG. 1. In the method, the NSMF device obtains a performance assurance policy of a network slice and a performance assurance policy of a network slice subnet, and delivers the performance assurance policy of the network slice subnet to the NSSMF device. Therefore, the NSMF device performs performance assurance on the network slice according to the performance assurance policy of the network slice, and the NSSMF device performs performance assurance on the network slice subnet according to the performance assurance policy of the network slice subnet. Specific steps are as follows:
S600. The NSMF device sends a first policy request to the DMF device, to request the performance assurance policy of the network slice and the performance assurance policy of the network slice subnet of the network slice.

The first policy request is used to request the performance assurance policy of the network slice and the performance assurance policy of the network slice subnet. Specifically, the first policy request belongs to a message type used to request the performance assurance policy, and/or the first policy request carries indication information for requesting the performance assurance policy. The first policy request may further carry an identifier of the network slice and/or an identifier of the network slice subnet. The first policy request further carries a requirement for the network slice. The first policy request may further carry a requirement for the network slice subnet. For specific content, refer to S200 in the embodiment shown in FIG. 2 and S400 in the embodiment shown in FIG. 4. Details are not described again.

The requirement for the network slice subnet is determined based on the requirement for the network slice. Specifically, the requirement for the network slice subnet may be obtained by decomposing the requirement for the network slice. For example, the NSMF device decomposes the requirement for the network slice into a requirement for a RAN network slice subnet, a requirement for a TN network slice subnet, and a requirement for a CN network slice subnet. Alternatively, the NSMF device requests the requirement for the network slice subnet from the MDAF device based on the requirement for the network slice, that is, the MDAF device decomposes the requirement for the network slice into the requirement for the network slice subnet, and returns the requirement for the network slice subnet to the NSMF device.

It should be understood that the network slice includes one or more network slice subnets. The network slice subnet mentioned in this embodiment of this application may be any network slice subnet of the network slice, or may be each network slice subnet of the network slice.

S601. The DMF device determines the performance assurance policy of the network slice and the performance assurance policy of the network slice subnet.

For specific content, refer to S201 in the embodiment shown in FIG. 2 and S401 in the embodiment shown in FIG. 4. Details are not described again.

In an implementation, the DMF device may obtain information related to performance assurance on the network slice and information related to performance assurance on the network slice subnet from another device, and further determine the performance assurance policy of the network slice and the performance assurance policy of the network slice subnet based on the obtained information. The following describes, by using an example, a process in which the DMF device obtains a first analysis result of the network slice from the MDAF device based on the requirement for the network slice and obtains a third analysis result of the network slice subnet from the MDAF device based on the requirement for the network slice subnet.

S6011. The DMF device sends a first analysis request to the MDAF device, to request the MDAF device to perform performance assurance analysis on the network slice and perform performance assurance analysis on the network slice subnet.

The first analysis request is used to request to analyze the network slice and the network slice subnet. The first analysis request may carry the identifier of the network slice and/or the identifier of the network slice subnet. The first analysis request may carry the requirement for the network slice, and the first analysis request may further carry the requirement for the network slice subnet. Specifically, the first analysis request is used to request to perform performance assurance analysis on the network slice and the network slice subnet. For example, the first analysis request belongs to a message type used to request performance assurance analysis, and/or the first analysis request carries indication information for requesting performance assurance analysis.

S6012. The MDAF device generates a first analysis result of the network slice and a third analysis result of the network slice subnet.

For specific content, refer to S2012 in the embodiment shown in FIG. 2 and S4012 in the embodiment shown in FIG. 4. Details are not described again.

S6013. The MDAF device returns a first analysis response to the DMF device, where the first analysis response carries the first analysis result and the third analysis result.

S6014. The DMF device determines the performance assurance policy of the network slice based on the first analysis result, and determines the performance assurance policy of the network slice subnet based on the third analysis result.

For specific content, refer to S2014 in the embodiment shown in FIG. 2 and S4014 in the embodiment shown in FIG. 4. Details are not described again.

In an optional manner, the DMF device may further obtain optimization information related to the network slice and/or optimization information related to the network slice subnet from a SON function device, determine the performance assurance policy of the network slice based on the optimization information related to the network slice, and determine the performance assurance policy of the network slice subnet based on the optimization information related to the network slice subnet. Alternatively, the DMF device may determine the performance assurance policy of the network slice based on the first analysis result and the optimization information related to the network slice, and determine the performance assurance policy of the network slice subnet based on the third analysis result and the optimization information related to the network slice subnet.

For specific content, refer to S201 in the embodiment shown in FIG. 2 and S401 in the embodiment shown in FIG. 4. Details are not described again.

S602. The DMF device returns a first policy response to the NSMF device, where the first policy response carries the performance assurance policy of the network slice and the performance assurance policy of the network slice subnet.

S603. The NSMF device delivers the performance assurance policy of the network slice subnet to the NSSMF device.

After receiving the first policy response, the NSMF device sends the performance assurance policy of the network slice subnet in the first policy response to the NSSMF device corresponding to the network slice subnet. For example, the NSMF device sends a performance assurance policy of a RAN network slice subnet to a RAN NSSMF device, the NSMF device sends a performance assurance policy of a TN network slice subnet to a TN NSSMF device, and the NSMF device sends a performance assurance policy of a CN network slice subnet to a CN NSSMF device.

In an optional manner, the NSMF device sends a slice profile (Slice Profile) of the network slice subnet to the NSSMF device, where the slice profile of the network slice subnet includes the performance assurance policy of the network slice subnet.

S604. The NSMF device executes the performance assurance policy of the network slice.

For specific content, refer to S203 in the embodiment shown in FIG. 2. Details are not described again.

S605. The NSSMF device executes the performance assurance policy of the network slice subnet.

For specific content, refer to S403 in the embodiment shown in FIG. 4. Details are not described again.

It should be understood that a sequence of performing S603, S604, and S605 is not limited, provided that S605 is performed after S603. For example, S603 may be performed after S604, or S603 and S604 may be performed simultaneously.

It should be understood that the NSMF device may obtain the performance assurance policy of the network slice and the performance assurance policy of the network slice subnet when the network slice is provisioned, or may update the performance assurance policy of the network slice and the performance assurance policy of the network slice subnet in a running process of the network slice, for example, when the requirement for the network slice and/or the running-network situation change/changes. This embodiment of this application may be applied to these cases. When the performance assurance policy of the network slice and the performance assurance policy of the network slice subnet are updated, the message name may change. For example, the first policy request in S600 may also be referred to as a first policy update request, and the first policy response in S602 may also be referred to as a first policy update response. Details are not described again.

In another embodiment, the NSMF device determines the performance assurance policy of the network slice and the performance assurance policy of the network slice subnet. In this case, S600 and S602 may not be performed. S601 is performed by the NSMF device, that is, the NSMF device determines the performance assurance policy of the network slice and the performance assurance policy of the network slice subnet. In addition, in S6011, the NSMF device sends the first analysis request to the MDAF device, and in S6013, the MDAF device sends the first analysis response to the NSMF device. In other words, in the foregoing embodiment, the DMF device is replaced with the NSMF device. For specific content, refer to the foregoing descriptions. Details are not described again. In this case, it may also be understood that the NSMF device and the DMF device are combined.

In another embodiment, the MDAF device determines the performance assurance policy of the network slice and the performance assurance policy of the network slice subnet. In this case, in S600, the NSMF device sends the first policy request to the MDAF device. S601 is performed by the MDAF device, that is, the MDAF device determines the performance assurance policy of the network slice and the performance assurance policy of the network slice subnet. S6011 and S6013 may not be performed. In S6014, the MDAF device determines the performance assurance policy of the network slice and the performance assurance policy of the network slice subnet based on the first analysis result. In S602, the MDAF device sends the first policy response to the NSMF device. In other words, in the foregoing embodiment, the DMF device is replaced with the MDAF device. For specific content, refer to the foregoing descriptions. Details are not described again. In this case, it may also be understood that the MDAF device and the DMF device are combined.

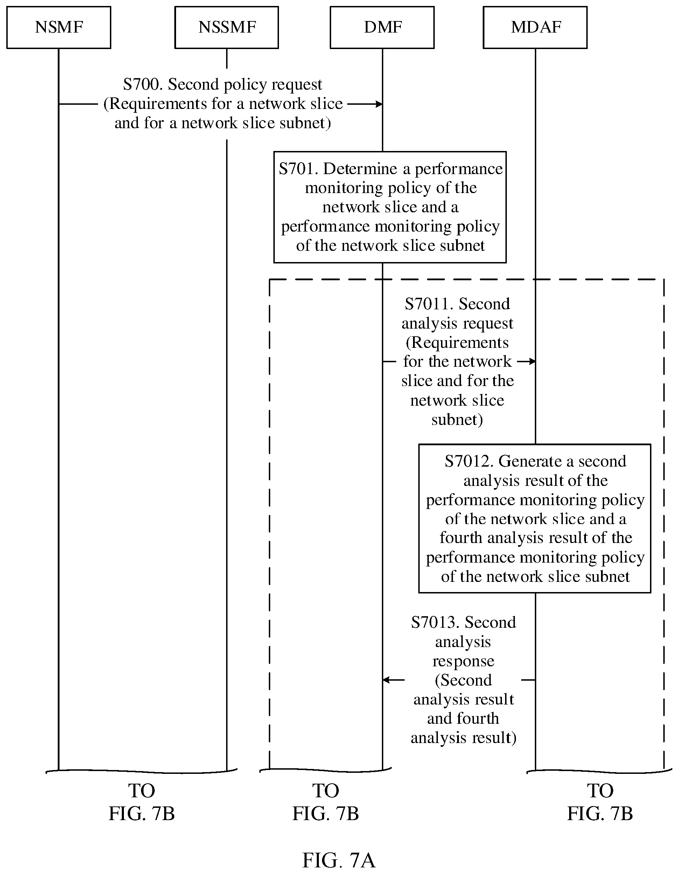

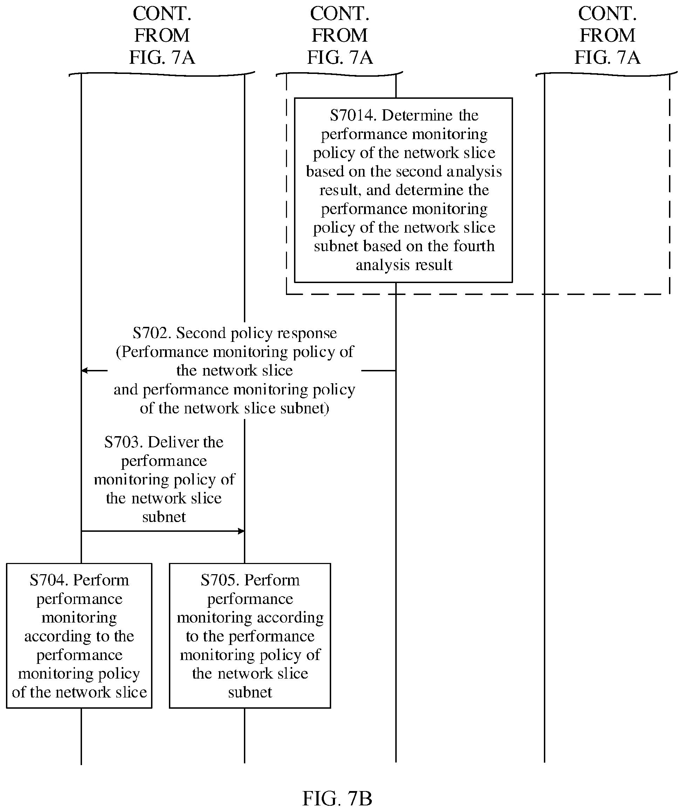

FIG. 7A and FIG. 7B show a network slice and network slice subnet management method according to an embodiment of this application. The method procedure is implemented based on the architecture shown in FIG. 1. An NSMF device corresponds to the NSMF device 102 in FIG. 1, an NSSMF device corresponds to the NSSMF device 103 in FIG. 1, a DMF device corresponds to the DMF device 104 in FIG. 1, and an MDAF device corresponds to the MDAF device 105 in FIG. 1. In the method, the NSMF device obtains a performance monitoring policy of a network slice and a performance monitoring policy of a network slice subnet, and delivers the performance monitoring policy of the network slice subnet to the NSSMF device. Therefore, the NSMF device performs performance monitoring on the network slice according to the performance monitoring policy of the network slice, and the NSSMF device performs performance monitoring on the network slice subnet according to the performance monitoring policy of the network slice subnet. Specific steps are as follows:
S700. The NSMF device sends a second policy request to the DMF device, to request the performance monitoring policy of the network slice and the performance monitoring policy of the network slice subnet of the network slice.

The second policy request is used to request the performance monitoring policy of the network slice and the performance monitoring policy of the network slice subnet. Specifically, the second policy request belongs to a message type used to request the performance monitoring policy, and/or the second policy request carries indication information for requesting the performance monitoring policy. The second policy request may further carry an identifier of the network slice and/or an identifier of the network slice subnet. The second policy request further carries a requirement for the network slice. The second policy request may further carry a requirement for the network slice subnet. For specific content, refer to S300 in the embodiment shown in FIG. 3 and S500 in the embodiment shown in FIG. 5. Details are not described again.

It should be understood that the network slice includes one or more network slice subnets. The network slice subnet mentioned in this embodiment of this application may be any network slice subnet of the network slice, or may be each network slice subnet of the network slice.

S701. The DMF device determines the performance monitoring policy of the network slice and the performance monitoring policy of the network slice subnet.

For specific content, refer to S301 in the embodiment shown in FIG. 3 and S501 in the embodiment shown in FIG. 5. Details are not described again.

In an implementation, the DMF device may obtain information related to performance monitoring on the network slice and information related to performance monitoring on the network slice subnet from another device, and further determine the performance monitoring policy of the network slice and the performance monitoring policy of the network slice subnet based on the obtained information. The following describes, by using an example, a process in which the DMF device obtains a second analysis result of the network slice from the MDAF device based on the requirement for the network slice and obtains a fourth analysis result of the network slice subnet from the MDAF device based on the requirement for the network slice subnet.

S7011. The DMF device sends a second analysis request to the MDAF device, to request the MDAF device to perform performance monitoring analysis on the network slice and perform performance monitoring analysis on the network slice subnet.

The second analysis request is used to request to analyze the network slice and the network slice subnet. The second analysis request may carry the identifier of the network slice and/or the identifier of the network slice subnet. The second analysis request may carry the requirement for the network slice, and the second analysis request may further carry the requirement for the network slice subnet. Specifically, the second analysis request is used to request to perform performance monitoring analysis on the network slice and the network slice subnet. For example, the second analysis request belongs to a message type used to request performance monitoring analysis, and/or the second analysis request carries indication information for requesting performance monitoring analysis.

S7012. The MDAF device generates a second analysis result of the network slice and a fourth analysis result of the network slice subnet.

For specific content, refer to S3012 in the embodiment shown in FIG. 3 and S5012 in the embodiment shown in FIG. 5. Details are not described again.

S7013. The MDAF device returns a second analysis response to the DMF device, where the second analysis response carries the second analysis result and the fourth analysis result.

S7014. The DMF device determines the performance monitoring policy of the network slice based on the second analysis result, and determines the performance monitoring policy of the network slice subnet based on the fourth analysis result.

For specific content, refer to S3014 in the embodiment shown in FIG. 3 and S5014 in the embodiment shown in FIG. 5. Details are not described again.

In an optional manner, the DMF device may further obtain optimization information related to the network slice and/or optimization information related to the network slice subnet from a SON function device, determine the performance monitoring policy of the network slice based on the optimization information related to the network slice, and determine the performance monitoring policy of the network slice subnet based on the optimization information related to the network slice subnet. Alternatively, the DMF device may determine the performance monitoring policy of the network slice based on the second analysis result and the optimization information related to the network slice, and determine the performance monitoring policy of the network slice subnet based on the fourth analysis result and the optimization information related to the network slice subnet.

For specific content, refer to S301 in the embodiment shown in FIG. 3 and S501 in the embodiment shown in FIG. 5. Details are not described again.

S702. The DMF device returns a second policy response to the NSMF device, where the second policy response carries the performance monitoring policy of the network slice and the performance monitoring policy of the network slice subnet.

S703. The NSMF device delivers the performance monitoring policy of the network slice subnet to the NSSMF device.

After receiving the second policy response, the NSMF device sends the performance monitoring policy of the network slice subnet in the second policy response to the NSSMF device corresponding to the network slice subnet. For example, the NSMF device sends a performance monitoring policy of a RAN network slice subnet to a RAN NSSMF device, the NSMF device sends a performance monitoring policy of a TN network slice subnet to a TN NSSMF device, and the NSMF device sends a performance monitoring policy of a CN network slice subnet to a CN NSSMF device.

In an optional manner, the NSMF device sends a slice profile (Slice Profile) of the network slice subnet to the NSSMF device, where the slice profile of the network slice subnet includes the performance monitoring policy of the network slice subnet.

S704. The NSMF device performs performance monitoring according to the performance monitoring policy of the network slice.

For specific content, refer to S303 in the embodiment shown in FIG. 3. Details are not described again.

S705. The NSSMF device performs performance monitoring according to the performance monitoring policy of the network slice subnet.

For specific content, refer to S503 in the embodiment shown in FIG. 5. Details are not described again.

It should be understood that a sequence of performing S703, S704, and S705 is not limited, provided that S705 is performed after S703. For example, S703 may be performed after S704, or S703 and S704 may be performed simultaneously.

In an optional manner, the NSMF device may request, by using a same message, the performance assurance policy of the network slice and the performance assurance policy of the network slice subnet from the DMF device, and the performance monitoring policy of the network slice and the performance monitoring policy of the network slice subnet from the DMF device. For example, the first policy request in the embodiment shown in FIG. 6A and FIG. 6B and the second policy request in this embodiment of this application are a same request message, and the request message is used to request both the performance assurance policy and the performance monitoring policy. Similarly, the first analysis request and the second analysis request may also be a same request message, and the request message is used to request to analyze both the performance assurance policy and the performance monitoring policy. The first analysis response and the second analysis response may also be a same response message, and the response message carries both the first analysis result of the performance assurance policy of the network slice and the second analysis result of the performance monitoring policy of the network slice. The first policy response and the second policy response may also be a same response message, and the response message carries the performance assurance policy of the network slice and the performance assurance policy of the network slice subnet, and also carries the performance monitoring policy of the network slice and the performance monitoring policy of the network slice subnet.

In another optional manner, the NSMF device may first request the performance assurance policy of the network slice and the performance assurance policy of the network slice subnet, and then request the performance monitoring policy of the network slice and the performance monitoring policy of the network slice subnet. For example, S600 in the embodiment shown in FIG. 6A and FIG. 6B is performed before S700 in the embodiment shown in FIG. 7A and FIG. 7B. In still another optional manner, the NSMF device may first request the performance monitoring policy of the network slice and the performance monitoring policy of the network slice subnet, and then request the performance assurance policy of the network slice and the performance assurance policy of the network slice subnet. For example, S600 in the embodiment shown in FIG. 6A and FIG. 6B is performed after S700 in the embodiment shown in FIG. 7A and FIG. 7B.

It should be understood that the NSMF device may obtain the performance monitoring policy of the network slice and the performance monitoring policy of the network slice subnet when the network slice is provisioned, or may update the performance monitoring policy of the network slice and the performance monitoring policy of the network slice subnet in a running process of the network slice, for example, when the requirement for the network slice and/or the running-network situation change/changes. This embodiment of this application may be applied to these cases. When the performance monitoring policy of the network slice and the performance monitoring policy of the network slice subnet are updated, the message name may change. For example, the second policy request in S700 may also be referred to as a second policy update request, and the second policy response in S702 may also be referred to as a second policy update response. Details are not described again.

In another embodiment, the NSMF device determines the performance monitoring policy of the network slice and the performance monitoring policy of the network slice subnet. In this case, S700 and S702 may not be performed, and S701 is performed by the NSMF device. In addition, in S7011, the NSMF device sends the second analysis request to the MDAF device, and in S7013, the MDAF device sends the second analysis response to the NSMF device. In other words, in the foregoing embodiment, the DMF device is replaced with the NSMF device. For specific content, refer to the foregoing descriptions. Details are not described again. In this case, it may also be understood that the NSMF device and the DMF device are combined.

In another embodiment, the MDAF device determines the performance monitoring policy of the network slice and the performance monitoring policy of the network slice subnet. In this case, in S700, the NSMF device sends the second policy request to the MDAF device. S701 is performed by the MDAF device, that is, the MDAF device determines the performance monitoring policy of the network slice and the performance monitoring policy of the network slice subnet. S7011 and S7013 may not be performed. In S7014, the MDAF device determines the performance monitoring policy of the network slice and the performance monitoring policy of the network slice subnet based on the second analysis result. In S702, the MDAF device sends the second policy response to the NSMF device. In other words, in the foregoing embodiment, the DMF device is replaced with the MDAF device. For specific content, refer to the foregoing descriptions. Details are not described again. In this case, it may also be understood that the MDAF device and the DMF device are combined.

A definition of a network resource model (Network Resource Model, NRM) facilitates network resource management. Currently, the NRM has defined a requirement model such as a service profile (Service Profile) and a slice profile (Slice Profile). The service profile describes a requirement for a network slice, and the slice profile describes a requirement for a network slice subnet. In the NRM, it is advantageous to expand a model related to a performance assurance policy and a model related to a performance monitoring policy. There are a plurality of expansion methods. The following specifically describes the methods.

A policy model is expanded in the NRM to define a management policy of a network resource. The policy model may include a performance assurance policy and a performance monitoring policy. Both the policy model and the requirement model belong to a data type (data type). The policy model may also be referred to as a policy profile (PolicyProfile). In this application, the policy profile is used as an example for description. As shown in FIG. 8A(1), a network slice may have a corresponding service profile and a corresponding policy profile. The policy profile is identified by using an identifier (ConfigId), and the policy profile may specifically include an overall policy (perfPolicy). The overall policy is a policy for all performance parameters or a part of main performance parameters, or the overall policy is a policy for all performance types or a part of main performance types. For the performance type and the performance parameter, refer to Table 1. Details are not described herein again. The overall policy may include an overall performance assurance policy (perfAssurePolicy) and/or an overall performance monitoring policy (perfMonPolicy).

The policy profile may further include a policy for a specific performance parameter or a specific performance type. The policy for the performance type is used as an example for description, for example, a latency policy (latency Policy), a coverage policy (coveragePolicy), and a capacity policy (capacity Policy). The latency policy (latencyPolicy) may further include a latency assurance policy (latencyAssurePolicy) and/or a latency monitoring policy (latencyMonPolicy). The coverage policy (coveragePolicy) may further include a coverage assurance policy (coverageAssurePolicy) and/or a coverage monitoring policy (coverageMonPolicy). The capacity policy (capacityPolicy) may further include a capacity assurance policy (capacity AssurePolicy) and/or a capacity monitoring policy (capacityMonPolicy). It should be understood that specific content included in the performance assurance policy and the performance monitoring policy has been described above. Details are not described herein again. As shown in FIG. 8A(2), the case is similar for a network slice subnet, and details are not described herein again. It should be understood that, in FIG.8A(1) and FIG. 8A(2), the policy profile is not distinguished between the policy profile of the network slice and the policy profile of the network slice subnet in terms of name. In another optional manner, the policy profile of the network slice may be referred to as a service policy profile, and the policy profile of the network slice subnet may be referred to as a slice policy profile. Alternatively, another method may be used for distinguishing. This is not limited in this application.

In another embodiment, an assurance policy model is expanded in the NRM to define a performance assurance policy of a network resource, and a monitoring policy model is expanded in the NRM to define a performance monitoring policy of the network resource. The assurance policy model, the monitoring policy model, and the requirement model belong to a data type. The assurance policy model may also be referred to as an assurance policy profile (AssurePolicyProfile), and the monitoring policy model may also be referred to as a monitoring policy profile (MonPolicyProfile). As shown in FIG. 8B(1), a network slice may have a corresponding service profile, a corresponding assurance policy profile, and/or a corresponding monitoring policy profile. The assurance policy profile is identified by using an identifier (ConfigId), and the assurance policy profile may specifically include an overall assurance policy (perfAssurePolicy). The overall assurance policy is an assurance policy for all performance parameters or a part of main performance parameters, or the overall assurance policy is an assurance policy for all performance types or a part of main performance types. The assurance policy profile may further include an assurance policy for a specific performance parameter or a specific performance type. The policy for the performance type is used as an example for description, for example, a latency assurance policy (latency AssurePolicy), a coverage assurance policy (coverageAssurePolicy), and a capacity assurance policy (capacity AssurePolicy).

The case is similar for the monitoring policy profile. The monitoring policy profile is identified by using an identifier (ConfigId), and the monitoring policy profile may specifically include an overall monitoring policy (perfMonPolicy). The overall monitoring policy is a monitoring policy for all performance parameters or a part of main performance parameters, or the overall monitoring policy is a monitoring policy for all performance types or a part of main performance types. The monitoring policy profile may further include a monitoring policy for a specific performance parameter or a specific performance type. The policy for the performance type is used as an example for description, for example, a latency monitoring policy (latencyMonPolicy), a coverage monitoring policy (coverageMonPolicy), and a capacity monitoring policy (capacityMonPolicy). As shown in FIG. 8B(2), the case is similar for a network slice subnet, and details are not described herein again.

Similarly, in FIG. 8B(1) and FIG. 8B(2), the assurance policy profile is not distinguished between the assurance policy profile of the network slice and the assurance policy profile of the network slice subnet in terms of name. In another optional manner, the assurance policy profile of the network slice may be referred to as a service assurance policy profile, and the assurance policy profile of the network slice subnet may be referred to as a slice assurance policy profile. Alternatively, another method may be used for distinguishing. This is not limited in this application. The case is similar for the monitoring policy profile, and details are not described again.

In another embodiment, the requirement model in the NRM is expanded, so that the requirement model can also define a management policy of a network resource. As shown in FIG. 8C(1), a network slice may have a corresponding service profile. The service profile is a class type, and a performance requirement, a performance assurance policy, and a performance monitoring policy are different attributes of the data type, that is, the service profile includes the performance requirement, the performance assurance policy, and/or the performance monitoring policy. For example, for a latency, the service profile specifically includes a latency requirement value (latencyValue), a latency assurance policy (latency AssurePolicy), and/or a latency monitoring policy (latencyMonPolicy). For coverage, the service profile specifically includes a coverage requirement value (coverageValue), a coverage assurance policy (coverageAssurePolicy), and/or a coverage monitoring policy (coverageMonPolicy). As shown in FIG. 8C(2), the case is similar for a network slice subnet, and details are not described herein again. It should be understood that, in this case, in S603 in the embodiment shown in FIG. 6A and FIG. 6B, the NSMF device may specifically send a slice profile to the NSSMF device, where the slice profile carries the performance assurance policy of the network slice subnet. In S703 in the embodiment shown in FIG. 7A and FIG. 7B, the NSMF device may specifically send the slice profile to the NSSMF device, where the slice profile carries the performance monitoring policy of the network slice subnet.

It should be understood that, in this application, performance assurance on the network slice and performance monitoring on the network slice are used as an example for description. However, this application is also applicable to performance assurance on a network slice instance and performance monitoring on the network slice instance. In this case, the network slice described in this application is replaced with the network slice instance. For example, the requirement for the network slice is replaced with a requirement for the network slice instance, the performance assurance policy of the network slice is replaced with a performance assurance policy of the network slice instance, and the performance monitoring policy of the network slice is replaced with a performance monitoring policy of the network slice instance. Details are not described again. The case is similar for the network slice subnet. The network slice subnet described in this specification is replaced with a network slice subnet instance. For example, the requirement for the network slice subnet is replaced with a requirement for the network slice subnet instance, the performance assurance policy of the network slice subnet is replaced with a performance assurance policy of the network slice subnet instance, and the performance monitoring policy of the network slice subnet is replaced with a performance monitoring policy of the network slice subnet instance. Details are not described again.

FIG. 9 is a schematic diagram of a structure of a network slice and network slice subnet management apparatus according to an embodiment of this application. In this application, the CSMF device 101, the NSMF device 102, the NSSMF device 103, the DMF device 104, and the MDAF device 105 may all use the structure of the apparatus shown in FIG. 9.

The apparatus includes at least one processor 901 and a memory 902, and may further include a communication bus 903, a communication interface 904, and an I/O interface 905. The processor may be a general-purpose central processing unit (CPU), a microprocessor, an application-specific integrated circuit (application-specific integrated circuit, ASIC), or one or more integrated circuits configured to control program execution of the solutions of this application.

The communications bus may include a channel for transmitting information between the foregoing components. The communication interface uses any apparatus such as a transceiver, and is configured to communicate with another device or a communication network, for example, perform communication by using the Ethernet, a radio access network (RAN), or a wireless local area network (Wireless Local Area Networks, WLAN).

For example, the memory may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (Electrically Erasable Programmable Read-Only Memory, EEPROM), a compact disc read-only memory (Compact Disc Read-Only Memory, CD-ROM) or another optical disk storage, an optical disc storage (including a compact disc, a laser disc, an optical disc, a digital versatile disc, a Blu-ray disc, or the like), a disk storage medium or another magnetic storage device, or any other medium that can be used to carry or store expected program code in a form of instructions or a data structure and that can be accessed by a computer. However, the memory is not limited thereto. The memory may exist independently, and is connected to the processor through the bus. Alternatively, the memory may be integrated with the processor.

The memory is configured to store program code used to execute the solutions of this application, and the processor controls the execution. The processor is configured to execute the program code stored in the memory.

In specific implementation, the processor may include one or more CPUs, and each CPU may be a single-core (single-core) processor, or may be a multi-core (multi-Core) processor. Herein, the processor may be one or more devices, circuits, and/or processing cores configured to process data (for example, computer program instructions).

In specific implementation, in an embodiment, the apparatus may further include an input/output (I/O) interface. For example, the output device may be a liquid crystal display (liquid crystal display, LCD), a light emitting diode (light emitting diode, LED) display device, a cathode ray tube (cathode ray tube, CRT) display device, or a projector (projector). The input device may be a mouse, a keyboard, a touchscreen device, a sensing device, or the like.

The apparatus may be a general-purpose computer device or a dedicated computer device. In specific implementation, the apparatus may be a desktop computer, a portable computer, a network server, a palmtop computer (Personal Digital Assistant, PDA), a mobile phone, a tablet computer, a wireless terminal device, a communication device, an embedded device, or a device with a structure similar to that in FIG. 9. A type of the apparatus is not limited in this embodiment of this application.

For the NSMF device 102, when the processor in the NSMF device 102 executes the program code stored in the memory, the NSMF device 102 may perform method steps corresponding to the NSMF device 102 in all the foregoing embodiments. For a specific execution process, refer to the foregoing embodiments. Details are not described herein again.

For the NSSMF device 103, when the processor in the NSSMF device 103 executes the program code stored in the memory, the NSSMF device 103 may perform method steps corresponding to the NSSMF device 103 in all the foregoing embodiments. For a specific execution process, refer to the foregoing embodiments. Details are not described herein again.

For the DMF device 104, when the processor in the DMF device 104 executes the program code stored in the memory, the DMF device 104 may perform method steps corresponding to the DMF device 104 in all the foregoing embodiments. For a specific execution process, refer to the foregoing embodiments. Details are not described herein again.

For the MDAF device 105, when the processor in the MDAF device 105 executes the program code stored in the memory, the MDAF device 105 may perform method steps corresponding to the MDAF device 105 in all the foregoing embodiments. For a specific execution process, refer to the foregoing embodiments. Details are not described herein again.

FIG. 10 is a schematic diagram of a structure of a network slice and network slice subnet management apparatus (which is specifically a DMF device 104) according to an embodiment of this application.

In an embodiment, a receiving module 1001 is configured to receive a first policy request sent by an NSMF device 102, where the first policy request carries a requirement for a network slice, and the first policy request is used to request a performance assurance policy of the network slice. For specific content, refer to step descriptions of the DMF device in the foregoing embodiment, for example, step 200 and step 600. A processing module 1002 is configured to determine the performance assurance policy of the network slice based on the requirement for the network slice. For specific content, refer to step descriptions of the DMF device in the foregoing embodiment, for example, step 201 and step 601. A sending module 1003 is configured to return the performance assurance policy to the NSMF device 102. For specific content, refer to step descriptions of the DMF device in the foregoing embodiment, for example, step 202 and step 602.

In another embodiment, a receiving module 1001 is configured to receive a second policy request sent by an NSMF device 102, where the second policy request carries a requirement for a network slice, and the second policy request is used to request a performance monitoring policy of the network slice. For specific content, refer to step descriptions of the DMF device in the foregoing embodiment, for example, step 300 and step 700. A processing module 1002 is configured to determine the performance monitoring policy of the network slice based on the requirement for the network slice. For specific content, refer to step descriptions of the DMF device in the foregoing embodiment, for example, step 301 and step 701. A sending module 1003 is configured to return the performance monitoring policy to the NSMF device 102. For specific content, refer to step descriptions of the DMF device in the foregoing embodiment, for example, step 302 and step 702.

In still another embodiment, a receiving module 1001 is configured to receive a third policy request sent by an NSSMF device 103, where the third policy request carries a requirement for a network slice subnet, and the third policy request is used to request a performance assurance policy of the network slice subnet. For specific content, refer to step descriptions of the DMF device in the foregoing embodiment, for example, step 400. A processing module 1002 is configured to determine the performance assurance policy of the network slice subnet based on the requirement for the network slice subnet. For specific content, refer to step descriptions of the DMF device in the foregoing embodiment, for example, step 401. A sending module 1003 is configured to return the performance assurance policy of the network slice subnet to the NSSMF device 103. For specific content, refer to step descriptions of the DMF device in the foregoing embodiment, for example, step 402.

In still another embodiment, a receiving module 1001 is configured to receive a fourth policy request sent by an NSSMF device 103, where the fourth policy request carries a requirement for a network slice subnet, and the fourth policy request is used to request a performance monitoring policy of the network slice subnet. For specific content, refer to step descriptions of the DMF device in the foregoing embodiment, for example, step 500. A processing module 1002 is configured to determine the performance monitoring policy of the network slice subnet based on the requirement for the network slice subnet. For specific content, refer to step descriptions of the DMF device in the foregoing embodiment, for example, step 501. A sending module 1003 is configured to return the performance monitoring policy of the network slice subnet to the NSSMF device 103. For specific content, refer to step descriptions of the DMF device in the foregoing embodiment, for example, step 502.

It should be understood that these modules of the apparatus are configured to implement related functions on the DMF device in the foregoing embodiment. Details are not described again. In addition, these modules of the apparatus may all have a function of implementing a behavior on the DMF device in the plurality of embodiments.

In this embodiment, the DMF device 104 is presented in a form of a functional module. The "module" herein may be a specific ASIC, a circuit, a processor and a memory that execute one or more software or firmware programs, an integrated logic circuit, and/or another component that can provide the foregoing functions. In a simple embodiment, a person skilled in the art may figure out that the DMF device 104 may be implemented in the form shown in FIG. 9. For example, a function that the processing module 1002 determines the performance assurance policy of the network slice based on the requirement for the network slice may be implemented by the processor 901 by executing the code stored in the memory 902.

FIG. 11 is a schematic diagram of a structure of a network slice and network slice subnet management apparatus (which is specifically an NSMF device 102) according to an embodiment of this application.

In an embodiment, a receiving module 1101 is configured to obtain a performance assurance policy of a network slice based on a requirement for the network slice. For specific content, refer to step descriptions of the NSMF device in the foregoing embodiment, for example, steps 200 to 202 and steps 600 to 602. A processing module 1102 is configured to execute the performance assurance policy of the network slice. For specific content, refer to step descriptions of the NSMF device in the foregoing embodiment, for example, step 203 and step 604.

In another embodiment, a receiving module 1101 is configured to obtain a performance monitoring policy of a network slice based on a requirement for the network slice. For specific content, refer to step descriptions of the NSMF device in the foregoing embodiment, for example, steps 300 to 302 and steps 700 to 702. A processing module 1102 is configured to execute the performance monitoring policy of the network slice. For specific content, refer to step descriptions of the NSMF device in the foregoing embodiment, for example, step 303 and step 704.

In still another embodiment, a receiving module 1101 is configured to obtain a performance assurance policy of a network slice and a performance assurance policy of a network slice subnet of the network slice based on a requirement for the network slice and a requirement for the network slice subnet. For specific content, refer to step descriptions of the NSMF device in the foregoing embodiment, for example, steps 600 to 602. A processing module 1102 is configured to execute the performance assurance policy of the network slice. For specific content, refer to step descriptions of the NSMF device in the foregoing embodiment, for example, step 604. A sending module 1103 is configured to deliver the performance assurance policy of the network slice subnet to an NSSMF device. For specific content, refer to step descriptions of the NSMF device in the foregoing embodiment, for example, step 603.

In still another embodiment, a receiving module 1101 is configured to obtain a performance monitoring policy of a network slice and a performance monitoring policy of a network slice subnet of the network slice based on a requirement for the network slice and a requirement for the network slice subnet. For specific content, refer to step descriptions of the NSMF device in the foregoing embodiment, for example, steps 700 to 702. A processing module 1102 is configured to execute the performance monitoring policy of the network slice. For specific content, refer to step descriptions of the NSMF device in the foregoing embodiment, for example, step 704. A sending module 1103 is configured to deliver the performance monitoring policy of the network slice subnet to an NSSMF device. For specific content, refer to step descriptions of the NSMF device in the foregoing embodiment, for example, step 704.

These modules of the apparatus are configured to implement related functions on the NSMF device side in the foregoing embodiment. Details are not described again. In addition, these modules of the apparatus may all have a function of implementing a behavior on the NSMF device side in the plurality of embodiments.

In this embodiment, the NSMF device 102 is presented in a form of a functional module. The "module" herein may be a specific ASIC, a circuit, a processor and a memory that execute one or more software or firmware programs, an integrated logic circuit, and/or another component that can provide the foregoing functions. In a simple embodiment, a person skilled in the art may figure out that the NSMF device 102 may be implemented in the form shown in FIG. 9. For example, a function that the processing module 1102 executes the performance assurance policy of the network slice may be implemented by the processor 901 by executing the code stored in the memory 902.

FIG. 12 is a schematic diagram of a structure of a network slice subnet management apparatus (which is specifically an NSSMF device 103) according to an embodiment of this application.

In an embodiment, a receiving module 1201 is configured to obtain a performance assurance policy of a network slice subnet. For specific content, refer to step descriptions of the NSSMF device in the foregoing embodiment, for example, steps 400 to 402 and step 603. A processing module 1202 is configured to execute the performance assurance policy of the network slice subnet. For specific content, refer to step descriptions of the NSSMF device in the foregoing embodiment, for example, step 403 and step 605.

In another embodiment, a receiving module 1201 is configured to obtain a performance monitoring policy of a network slice subnet. For specific content, refer to step descriptions of the NSSMF device in the foregoing embodiment, for example, steps 500 to 502 and step 703. A processing module 1202 is configured to perform performance monitoring on the network slice subnet according to the performance monitoring policy of the network slice subnet. For specific content, refer to step descriptions of the NSSMF device in the foregoing embodiment, for example, step 503 and step 705.

In addition, the apparatus may further include a sending module 1203 and the like. These modules of the apparatus are configured to implement related functions on the NSSMF device side in the foregoing embodiment. Details are not described again. In addition, these modules of the apparatus may all have a function of implementing a behavior on the NSSMF device side in the plurality of embodiments.

In this embodiment, the NSSMF device 103 is presented in a form of a functional module. The "module" herein may be a specific ASIC, a circuit, a processor and a memory that execute one or more software or firmware programs, an integrated logic circuit, and/or another component that can provide the foregoing functions. In a simple embodiment, a person skilled in the art may figure out that the NSSMF device 103 may be implemented in the form shown in FIG. 9. For example, a function that the processing module 1102 performs performance monitoring on the network slice subnet according to the performance monitoring policy of the network slice subnet may be implemented by the processor 901 by executing the code stored in the memory 902.

In the descriptions of this application, unless otherwise specified, the character "/" means an "or" relationship between associated objects. For example, A/B may represent A or B. The term "and/or" in this application is only an association relationship for describing associated objects, and represents that three relationships may exist. For example, A and/or B may represent the following three cases: Only A exists, both A and B exist, and only B exists. A and B each may be in a singular or plural form.

A person of ordinary skill in the art may be aware that, in combination with the examples described in embodiments disclosed in this specification, units and algorithm steps can be implemented by electronic hardware, computer software, or a combination thereof. To clearly describe the interchangeability between the hardware and the software, the foregoing has generally described compositions and steps of each example based on functions. Whether the functions are performed by hardware or software depends on particular application and design constraint conditions of the technical solutions. A person skilled in the art may use different methods to implement the described functions for each particular application, but it should not be considered that the implementation goes beyond the scope of this application.

In several embodiments provided in this application, it should be understood that the disclosed system, apparatus, and method may be implemented in another manner. For example, division into the modules is merely logical function division and may be another division in actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electrical, mechanical, or other forms.

The modules described as separate parts may or may not be physically separate, and parts displayed as modules may or may not be physical modules, may be located in one position, or may be distributed on a plurality of network modules. Some or all the modules may be selected based on an actual requirement to achieve the objectives of the solutions of the embodiments.

In addition, each functional module in embodiments of this application may be implemented in a form of hardware, or may be implemented in a form of a software functional module. When the functions are implemented in the form of a software functional module and sold or used as an independent product, the functions may be stored in a computer-readable storage medium. Based on such an understanding, the technical solutions of this application essentially, or the part contributing to the conventional technology, or all or some of the technical solutions may be embodied in a form of a computer program product. The computer program product includes one or more computer instructions. When the computer program instructions are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The available medium may be a magnetic medium (for example, a floppy disk, a hard disk, or a magnetic tape), an optical medium (for example, a DVD), a semiconductor medium (for example, a solid-state drive Solid-State Drive (SSD)), or the like.

The foregoing descriptions are merely specific embodiments of this application, but are not intended to limit the protection scope of this application. Therefore, the protection scope of this application shall be subject to the protection scope of the claims.

## Claims

1. A network slice management method, performed by a decision management function device (104), wherein the method comprises:
receiving a first policy request from a network slice management function device (102), wherein the first policy request carries a requirement for a network slice, and the first policy request is used to request a performance assurance policy of the network slice;
determining the performance assurance policy of the network slice based on the requirement for the network slice; and
returning the performance assurance policy to the network slice management function device (102),
wherein the performance assurance policy of the network slice comprises any one or more of the following, or comprises information used to obtain any one or more of the following:
a trigger condition, used to determine whether to continue to execute the performance assurance policy of the network slice;
a problem root cause, indicating a cause of a performance problem of the network slice;
a management behavior, indicating a behavior of managing the network slice and/or a network slice subnet of the network slice; and
a management notification, indicating to notify a management device of the network slice subnet to execute a management behavior on the network slice subnet.

2. The method according to claim 1, wherein the determining the performance assurance policy of the network slice based on the requirement for the network slice comprises:
obtaining a first analysis result of the network slice from a management data analytics function device (105) based on the requirement for the network slice; and
determining the performance assurance policy of the network slice based on the first analysis result.

3. The method according to claim 2, wherein the determining the performance assurance policy of the network slice based on the first analysis result comprises:
obtaining optimization information related to the network slice from a self-organizing network function device; and
determining the performance assurance policy of the network slice based on the optimization information related to the network slice and the first analysis result.

4. The method according to any one of claims 1 to 3, further comprising:
receiving a second policy request from the network slice management function device (102), wherein the second policy request carries the requirement for the network slice, and the second policy request is used to request a performance monitoring policy of the network slice;
determining the performance monitoring policy of the network slice based on the requirement for the network slice; and
returning the performance monitoring policy to the network slice management function device (102).

5. The method according to any one of claims 1 to 4, wherein the first policy request further carries a requirement for the network slice subnet of the network slice, the first policy request is further used to request a performance assurance policy of the network slice subnet, and the method further comprises:
determining the performance assurance policy of the network slice subnet based on the requirement for the network slice subnet; and
returning the performance assurance policy of the network slice subnet to the network slice management function device (102).

6. The method according to any one of claims 1 to 4, further comprising:
receiving a third policy request from a network slice subnet management function device (103), wherein the third policy request carries a requirement for the network slice subnet of the network slice, and the third policy request is used to request a performance assurance policy of the network slice subnet;
determining the performance assurance policy of the network slice subnet based on the requirement for the network slice subnet; and
returning the performance assurance policy of the network slice subnet to the network slice subnet management function device (103).

7. A network slice management method, performed by a network slice management function device (102), wherein the method comprises:
sending a first policy request to a decision management function device (104), wherein the first policy request carries a requirement for a network slice, and the first policy request is used to request a performance assurance policy of the network slice;
receiving the performance assurance policy of the network slice based on the requirement for the network slice from the decision management function device (104); and
executing the performance assurance policy of the network slice,
wherein the performance assurance policy of the network slice comprises any one or more of the following, or comprises information used to obtain any one or more of the following:
a trigger condition, used to determine whether to continue to execute the performance assurance policy of the network slice;
a problem root cause, indicating a cause of a performance problem of the network slice;
a management behavior, indicating a behavior of managing the network slice and/or a network slice subnet of the network slice; and
a management notification, indicating to notify a network slice subnet management function device (103) to execute a management behavior on the network slice subnet.

8. The method according to claim 7, further comprising:
sending a second policy request to the decision management function device (104), wherein the second policy request carries the requirement for the network slice, and the second policy request is used to request a performance monitoring policy of the network slice;
receiving the performance monitoring policy of the network slice based on the requirement for the network slice from the decision management function device (104);
performing performance monitoring on the network slice according to the performance monitoring policy of the network slice; and
executing the performance assurance policy of the network slice based on a performance monitoring result of the network slice.

9. The method according to any one of claims 7 to 8, further comprising:
obtaining a performance assurance policy of the network slice subnet based on a requirement for the network slice subnet of the network slice; and
sending the performance assurance policy of the network slice subnet to the network slice subnet management function device (103).

10. A network slice subnet management method, performed by a network slice subnet management function device (103), wherein the method comprises:
sending a third policy request to a decision management function device (104), wherein the third policy request carries a requirement for a network slice subnet, and the first policy request is used to request a performance assurance policy of the network slice subnet;
receiving the performance assurance policy of the network slice subnet from the decision management function device (104); and
executing the performance assurance policy of the network slice subnet,
wherein the performance assurance policy of the network slice subnet comprises any one or more of the following, or comprises information used to obtain any one or more of the following:
a trigger condition, used to determine whether to continue to execute the performance assurance policy of the network slice subnet;
a problem root cause, indicating a cause of a performance problem of the network slice subnet;
a management behavior, indicating a behavior of managing a network element of the network slice subnet and/or the network slice subnet; and
a management notification, indicating to notify a management device of the network element to execute a management behavior on the network element.

11. A communication apparatus, configured to perform the method according to any one of claims 1 to 6, or the method according to any one of claims 7 to 9, or the method according to claim 10.

12. A computer-readable storage medium, storing instructions, wherein when the instructions are run, a device running the instructions performs the method according to any one of claims 1 to 6, or the method according to any one of claims 7 to 9, or the method according to claim 10.

13. A computer program product, where when the computer program product is run on a computer, the computer is enabled to perform the method according to any one of claims 1 to 6, or the method according to any one of claims 7 to 9, or the method according to claim 10.

14. A system, comprising a decision management function device (104) and a network slice management function device (102), wherein
the decision management function device (104) is configured to perform the method according to any one of claims 1 to 6; and the network slice management function device (102) is configured to perform the method according to any one of claims 7 to 9.

15. The system according to the claim 14, further comprising:
a network slice subnet management function device(103) configured to perform the method according to claim 10.

## Patentansprüche

1. Netzwerk-Slice-Verwaltungsverfahren, das von einer Vorrichtung (104) mit Entscheidungsverwaltungsfunktion durchgeführt wird, wobei das Verfahren umfasst:
Empfangen einer ersten Richtlinienanforderung von einer Vorrichtung (102) mit Netzwerk-Slice-Verwaltungsfunktion, wobei die erste Richtlinienanforderung eine Anforderung für einen Netzwerk-Slice enthält, und die erste Richtlinienanforderung verwendet wird, um eine Leistungssicherungsrichtlinie des Netzwerk-Slice anzufordern;
Bestimmen der Leistungssicherungsrichtlinie des Netzwerk-Slice basierend auf der Anforderung für den Netzwerk-Slice; und
Zurückgeben der Leistungssicherungsrichtlinie an die Vorrichtung (102) mit Netzwerk-Slice-Verwaltungsfunktion,
wobei die Leistungssicherungsrichtlinie des Netzwerk-Slice eines oder mehrere von Folgendem umfasst oder Informationen umfasst, die verwendet werden, um eines oder mehrere von Folgendem zu erlangen:
eine Auslösebedingung, die verwendet wird, um zu bestimmen, ob die Leistungssicherungsrichtlinie des Netzwerk-Slice weiter auszuführen ist;
eine Problemgrundursache, die eine Ursache eines Leistungsproblems des Netzwerk-Slice angibt;
ein Verwaltungsverhalten, das ein Verhalten zum Verwalten des Netzwerk-Slice und/oder eines Netzwerk-Slice-Subnetzes des Netzwerk-Slice angibt; und
eine Verwaltungsbenachrichtigung, die angibt, eine Verwaltungsvorrichtung des Netzwerk-Slice-Subnetzes zu benachrichtigen, um ein Verwaltungsverhalten auf dem Netzwerk-Slice-Subnetz auszuführen.

2. Verfahren nach Anspruch 1, wobei das Bestimmen der Leistungssicherungsrichtlinie des Netzwerk-Slice basierend auf der Anforderung für den Netzwerk-Slice umfasst:
Erlangen eines ersten Analyseergebnisses des Netzwerk-Slice von einer Vorrichtung (105) mit Verwaltungsdaten-Analysefunktion basierend auf der Anforderung für den Netzwerk-Slice; und
Bestimmen der Leistungssicherungsrichtlinie des Netzwerk-Slice basierend auf dem ersten Analyseergebnis.

3. Verfahren nach Anspruch 2, wobei das Bestimmen der Leistungssicherungsrichtlinie des Netzwerk-Slice basierend auf dem ersten Analyseergebnis umfasst:
Erlangen von Optimierungsinformationen, die sich auf den Netzwerk-Slice beziehen, von einer selbstorganisierenden Netzwerkfunktionsvorrichtung; und
Bestimmen der Leistungssicherungsrichtlinie des Netzwerk-Slice basierend auf den Optimierungsinformationen, die sich auf den Netzwerk-Slice beziehen, und dem ersten Analyseergebnis.

4. Verfahren nach einem der Ansprüche 1 bis 3, ferner umfassend:
Empfangen einer zweiten Richtlinienanforderung von der Vorrichtung (102) mit Netzwerk-Slice-Verwaltungsfunktion wobei die zweite Richtlinienanforderung die Anforderung für den Netzwerk-Slice enthält, und die zweite Richtlinienanforderung verwendet wird, um eine Leistungsüberwachungsrichtlinie des Netzwerk-Slice anzufordern;
Bestimmen der Leistungsüberwachungsrichtlinie des Netzwerk-Slice basierend auf der Anforderung für den Netzwerk-Slice; und
Zurückgeben der Leistungsüberwachungsrichtlinie an die Vorrichtung (102) mit Netzwerk-Slice-Verwaltungsfunktion.

5. Verfahren nach einem der Ansprüche 1 bis 4, wobei die erste Richtlinienanforderung ferner eine Anforderung für das Netzwerk-Slice-Subnetz des Netzwerk-Slice trägt, die erste Richtlinienanforderung ferner verwendet wird, um eine Leistungssicherungsrichtlinie des Netzwerk-Slice-Subnetzes anzufordern, und das Verfahren ferner umfasst:
Bestimmen der Leistungssicherungsrichtlinie des Netzwerk-Slice-Subnetzes basierend auf der Anforderung für das Netzwerk-Slice-Subnetz; und
Zurückgeben der Leistungssicherungsrichtlinie des Netzwerk-Slice-Subnetzes an die Vorrichtung (102) mit Netzwerk-Slice-Verwaltungsfunktion.

6. Verfahren nach einem der Ansprüche 1 bis 4, ferner umfassend:
Empfangen einer dritten Richtlinienanforderung von einer Vorrichtung (103) mit Netzwerk-Slice-Subnetz-Verwaltungsfunktion, wobei die dritte Richtlinienanforderung eine Anforderung für das Netzwerk-Slice-Subnetz des Netzwerk-Slice enthält, und die dritte Richtlinienanforderung verwendet wird, um eine Leistungssicherungsrichtlinie des Netzwerk-Slice-Subnetzes anzufordern;
Bestimmen der Leistungssicherungsrichtlinie des Netzwerk-Slice-Subnetzes basierend auf der Anforderung für das Netzwerk-Slice-Subnetz; und
Zurückgeben der Leistungssicherungsrichtlinie des Netzwerk-Slice-Subnetzes an die Vorrichtung (103) mit Netzwerk-Slice-Subnetz-Verwaltungsfunktion.

7. Netzwerk-Slice-Verwaltungsverfahren, das von einer Vorrichtung (102) mit Netzwerk-Slice-Verwaltungsfunktion durchgeführt wird, wobei das Verfahren umfasst:
Senden einer ersten Richtlinienanforderung an eine Vorrichtung (104) mit Entscheidungsverwaltungsfunktion, wobei die erste Richtlinienanforderung eine Anforderung für einen Netzwerk-Slice enthält, und die erste Richtlinienanforderung verwendet wird, um eine Leistungssicherungsrichtlinie des Netzwerk-Slice anzufordern;
Empfangen der Leistungssicherungsrichtlinie des Netzwerk-Slice basierend auf der Anforderung für den Netzwerk-Slice von der Vorrichtung (104) mit Entscheidungsverwaltungsfunktion; und
Ausführen der Leistungssicherungsrichtlinie des Netzwerk-Slice, wobei die Leistungssicherungsrichtlinie des Netzwerk-Slice eines oder mehrere von Folgendem umfasst oder Informationen umfasst, die verwendet werden, um eines oder mehrere von Folgendem zu erlangen:
eine Auslösebedingung, die verwendet wird, um zu bestimmen, ob die Leistungssicherungsrichtlinie des Netzwerk-Slice weiter auszuführen ist;
eine Problemgrundursache, die eine Ursache eines Leistungsproblems des Netzwerk-Slice angibt;
ein Verwaltungsverhalten, das ein Verhalten zum Verwalten des Netzwerk-Slice und/oder eines Netzwerk-Slice-Subnetzes des Netzwerk-Slice angibt; und
eine Verwaltungsbenachrichtigung, die angibt, eine Vorrichtung (103) mit Netzwerk-Slice-Subnetz-Verwaltungsfunktion zu benachrichtigen, um ein Verwaltungsverhalten auf dem Netzwerk-Slice-Subnetz auszuführen.

8. Verfahren nach Anspruch 7, ferner umfassend:
Senden einer zweiten Richtlinienanforderung an die Vorrichtung (104) mit Entscheidungsverwaltungsfunktion, wobei die zweite Richtlinienanforderung die Anforderung für den Netzwerk-Slice enthält, und die zweite Richtlinienanforderung verwendet wird, um eine Leistungsüberwachungsrichtlinie des Netzwerk-Slice anzufordern;
Empfangen der Leistungsüberwachungsrichtlinie des Netzwerk-Slice basierend auf der Anforderung für den Netzwerk-Slice von der Vorrichtung (104) mit Entscheidungsverwaltungsfunktion;
Durchführen einer Leistungsüberwachung an dem Netzwerk-Slice gemäß der Leistungsüberwachungsrichtlinie des Netzwerk-Slice; und
Ausführen der Leistungssicherungsrichtlinie des Netzwerk-Slice basierend auf einem Leistungsüberwachungsergebnis des Netzwerk-Slice.

9. Verfahren nach einem der Ansprüche 7 bis 8, ferner umfassend:
Erlangen einer Leistungssicherungsrichtlinie des Netzwerk-Slice-Subnetzes basierend auf einer Anforderung für das Netzwerk-Slice-Subnetz des Netzwerk-Slice; und
Senden der Leistungssicherungsrichtlinie des Netzwerk-Slice-Subnetzes an die Vorrichtung (103) mit Netzwerk-Slice-Subnetz-Verwaltungsfunktion.

10. Netzwerk-Slice-Verwaltungsverfahren, das von einer Vorrichtung (103) mit Netzwerk-Slice-Subnetz-Verwaltungsfunktion durchgeführt wird, wobei das Verfahren umfasst:
Senden einer dritten Richtlinienanforderung an eine Vorrichtung (104) mit Entscheidungsverwaltungsfunktion, wobei die dritte Richtlinienanforderung eine Anforderung für ein Netzwerk-Slice-Subnetz trägt, und die dritte Richtlinienanforderung verwendet wird, um eine Leistungssicherungsrichtlinie des Netzwerk-Slice-Subnetzes anzufordern;
Empfangen der Leistungssicherungsrichtlinie des Netzwerk-Slice-Subnetzes von der Vorrichtung (104) mit Entscheidungsverwaltungsfunktion; und
Ausführen der Leistungssicherungsrichtlinie des Netzwerk-Slice-Subnetzes,
wobei die Leistungssicherungsrichtlinie des Netzwerk-Slice-Subnetzes eines oder mehrere von Folgendem umfasst oder Informationen umfasst, die verwendet wird, um eines oder mehrere von Folgendem zu erlangen:
eine Auslösebedingung, die verwendet wird, um zu bestimmen, ob die Leistungssicherungsrichtlinie des Netzwerk-Slice-Subnetzes weiter auszuführen ist;
eine Problemgrundursache, die eine Ursache eines Leistungsproblems des Netzwerk-Slice-Subnetzes angibt;
ein Verwaltungsverhalten, das ein Verhalten zum Verwalten eines Netzwerkelements des Netzwerk-Slice-Subnetzes und/oder des Netzwerk-Slice-Subnetzes angibt; und
eine Verwaltungsbenachrichtigung, die angibt, eine Verwaltungsvorrichtung des Netzwerkelements zu benachrichtigen, um ein Verwaltungsverhalten auf dem Netzwerkelement auszuführen.

11. Kommunikationsevorrichtung, die zum Durchführen des Verfahrens nach einem der Ansprüche 1 bis 6, oder des Verfahrens nach einem der Ansprüche 7 bis 9, oder des Verfahrens nach Anspruch 10 konfiguriert ist.

12. Computerlesbares Speichermedium, das Anweisungen speichert, wobei bei Ausführung der Anweisungen eine Vorrichtung, die die Anweisungen ausführt, das Verfahren nach einem der Ansprüche 1 bis 6 oder das Verfahren nach einem der Ansprüche 7 bis 9 oder das Verfahren nach Anspruch 10 durchführt.

13. Computerprogrammprodukt, wobei bei Ausführung des Computerprogrammprodukts auf einem Computer der Computer in die Lage versetzt wird, das Verfahren nach einem der Ansprüche 1 bis 6 oder das Verfahren nach einem der Ansprüche 7 bis 9 oder das Verfahren nach Anspruch 10 durchzuführen.

14. System, umfassend eine Vorrichtung (104) mit Entscheidungsverwaltungsfunktion und eine Netzwerk-Slice-Verwaltungsfunktionsvorrichtung (102), wobei
die Vorrichtung (104) mit Entscheidungsverwaltungsfunktion dazu konfiguriert ist, das Verfahren nach einem der Ansprüche 1 bis 6 durchzuführen; und die Vorrichtung (102) mit Netzwerk-Slice-Verwaltungsfunktion dazu konfiguriert ist, das Verfahren nach einem der Ansprüche 7 bis 9 durchzuführen.

15. System nach Anspruch 14, ferner umfassend:
eine Netzwerk-Slice-Subnetz-Verwaltungsfunktionsvorrichtung (103), die dazu konfiguriert ist, das Verfahren nach Anspruch 10 durchzuführen.

## Revendications

1. Procédé de gestion de tranche de réseau, réalisé par un dispositif à fonction de gestion de décision (104), dans lequel le procédé comprend :
la réception d'une première demande de politique en provenance d'un dispositif à fonction de gestion de tranche de réseau (102), dans lequel la première demande de politique comporte une exigence pour une tranche de réseau, et la première demande de politique est utilisée pour demander une politique d'assurance de performance de la tranche de réseau ;
la détermination de la politique d'assurance de performance de la tranche de réseau sur la base de l'exigence pour la tranche de réseau ; et
le renvoi de la politique d'assurance de performance au dispositif à fonction de gestion de tranche de réseau (102),
dans lequel la politique d'assurance de performance de la tranche de réseau comprend l'un ou plusieurs des éléments suivants, ou comprend des informations utilisées pour obtenir l'un ou plusieurs des éléments suivants :
une condition de déclenchement, utilisée pour déterminer s'il faut continuer à exécuter la politique d'assurance de performance de la tranche de réseau ;
une cause profonde du problème, indiquant une cause d'un problème de performance de la tranche de réseau ;
un comportement de gestion, indiquant un comportement de gestion de la tranche de réseau et/ou d'un sous-réseau de tranche de réseau de la tranche de réseau ; et
une notification de gestion, indiquant de notifier un dispositif de gestion du sous-réseau de tranche de réseau afin d'exécuter un comportement de gestion sur le sous-réseau de tranche de réseau.

2. Procédé selon la revendication 1, dans lequel la détermination de la politique d'assurance de performance de la tranche de réseau sur la base de l'exigence pour la tranche de réseau comprend :
l'obtention d'un premier résultat d'analyse de la tranche de réseau en provenance d'un dispositif à fonction d'analyse de données de gestion (105) sur la base de l'exigence pour la tranche de réseau ; et
la détermination de la politique d'assurance de performance de la tranche de réseau sur la base du premier résultat d'analyse.

3. Procédé selon la revendication 2, dans lequel la détermination de la politique d'assurance de performance de la tranche de réseau sur la base du premier résultat d'analyse comprend :
l'obtention d'informations d'optimisation relatives à la tranche de réseau en provenance d'un dispositif à fonction de réseau auto-organisatrice ; et
la détermination de la politique d'assurance de performance de la tranche de réseau sur la base des informations d'optimisation relatives à la tranche de réseau et du premier résultat d'analyse.

4. Procédé selon l'une quelconque des revendications 1 à 3, comprenant également :
la réception d'une deuxième demande de politique en provenance du dispositif à fonction de gestion de tranche de réseau (102), dans lequel la deuxième demande de politique comporte l'exigence pour la tranche de réseau, et la deuxième demande de politique est utilisée pour demander une politique de surveillance de performance de la tranche de réseau ;
la détermination de la politique de surveillance de performance de la tranche de réseau sur la base de l'exigence pour la tranche de réseau ; et
le renvoi de la politique de surveillance de performance au dispositif à fonction de gestion de tranche de réseau (102).

5. Procédé selon l'une quelconque des revendications 1 à 4, dans lequel la première demande de politique comporte également une exigence pour le sous-réseau de tranche de réseau de la tranche de réseau, la première demande de politique est également utilisée pour demander une politique d'assurance de performance du sous-réseau de tranche de réseau, et le procédé comprend également :
la détermination de la politique d'assurance de performance du sous-réseau de tranche de réseau sur la base de l'exigence pour le sous-réseau de tranche de réseau ; et
le renvoi de la politique d'assurance de performance du sous-réseau de tranche de réseau au dispositif à fonction de gestion de tranche de réseau (102).

6. Procédé selon l'une quelconque des revendications 1 à 4, comprenant également :
la réception d'une troisième demande de politique provenant d'un dispositif à fonction de gestion de sous-réseau de tranche de réseau (103), dans lequel la troisième demande de politique comporte une exigence pour le sous-réseau de tranche de réseau de la tranche de réseau, et la troisième demande de politique est utilisée pour demander une politique d'assurance de performance du sous-réseau de tranche de réseau ;
la détermination de la politique d'assurance de performance du sous-réseau de tranche de réseau sur la base de l'exigence pour le sous-réseau de tranche de réseau ; et
le renvoi de la politique d'assurance de performance du sous-réseau de tranche de réseau au dispositif à fonction de gestion de sous-réseau de tranche de réseau (103).

7. Procédé de gestion de tranche de réseau, réalisé par un dispositif à fonction de gestion de tranche de réseau (102), dans lequel le procédé comprend :
l'envoi d'une première demande de politique à un dispositif à fonction de gestion de décision (104), dans lequel la première demande de politique comporte une exigence pour une tranche de réseau, et la première demande de politique est utilisée pour demander une politique d'assurance de performance de la tranche de réseau ;
la réception de la politique d'assurance de performance de la tranche de réseau sur la base de l'exigence pour la tranche de réseau en provenance du dispositif à fonction de gestion de décision (104) ; et
l'exécution de la politique d'assurance de performance de la tranche de réseau,
dans lequel la politique d'assurance de performance de la tranche de réseau comprend l'un ou plusieurs des éléments suivants, ou comprend des informations utilisées pour obtenir l'un ou plusieurs des éléments suivants :
une condition de déclenchement, utilisée pour déterminer s'il faut continuer à exécuter la politique d'assurance de performance de la tranche de réseau ;
une cause profonde du problème, indiquant une cause d'un problème de performance de la tranche de réseau ;
un comportement de gestion, indiquant un comportement de gestion de la tranche de réseau et/ou d'un sous-réseau de tranche de réseau de la tranche de réseau ; et
une notification de gestion, indiquant de notifier un dispositif à fonction de gestion de sous-réseau de tranche de réseau (103) afin d'exécuter un comportement de gestion sur le sous-réseau de tranche de réseau.

8. Procédé selon la revendication 7, comprenant également :
l'envoi d'une deuxième demande de politique au dispositif à fonction de gestion de décision (104), dans lequel la deuxième demande de politique comporte l'exigence pour la tranche de réseau, et la deuxième demande de politique est utilisée pour demander une politique de surveillance de performance de la tranche de réseau ;
la réception de la politique de surveillance de performance de la tranche de réseau sur la base de l'exigence pour la tranche de réseau en provenance du dispositif à fonction de gestion de décision (104) ;
la réalisation de la surveillance de performance sur la tranche de réseau selon la politique de surveillance de performance de la tranche de réseau ; et
l'exécution de la politique d'assurance de performance de la tranche de réseau sur la base d'un résultat de surveillance de performance de la tranche de réseau.

9. Procédé selon l'une quelconque des revendications 7 et 8, comprenant également :
l'obtention d'une politique d'assurance de performance du sous-réseau de tranche de réseau sur la base d'une exigence pour le sous-réseau de tranche de réseau de la tranche de réseau ; et
l'envoi de la politique d'assurance de performance du sous-réseau de tranche de réseau au dispositif à fonction de gestion de sous-réseau de tranche de réseau (103).

10. Procédé de gestion de sous-réseau de tranche de réseau, réalisé par un dispositif à fonction de gestion de sous-réseau de tranche de réseau (103), dans lequel le procédé comprend :
l'envoi d'une troisième demande de politique à un dispositif à fonction de gestion de décision (104), dans lequel la troisième demande de politique comporte une exigence pour un sous-réseau de tranche de réseau, et la première demande de politique est utilisée pour demander une politique d'assurance de performance du sous-réseau de tranche de réseau ;
la réception de la politique d'assurance de performance du sous-réseau de tranche de réseau en provenance du dispositif à fonction de gestion de décision (104) ; et
l'exécution de la politique d'assurance de performance du sous-réseau de tranche de réseau,
dans lequel la politique d'assurance de performance du sous-réseau de tranche de réseau comprend l'un ou plusieurs des éléments suivants, ou comprend des informations utilisées pour obtenir l'un ou plusieurs des éléments suivants :
une condition de déclenchement, utilisée pour déterminer s'il faut continuer à exécuter la politique d'assurance de performance du sous-réseau de tranche de réseau ;
une cause profonde du problème, indiquant une cause d'un problème de performance du sous-réseau de tranche de réseau ;
un comportement de gestion, indiquant un comportement de gestion d'un élément de réseau du sous-réseau de tranche de réseau et/ou du sous-réseau de tranche de réseau ; et
une notification de gestion, indiquant de notifier un dispositif de gestion de l'élément de réseau afin d'exécuter un comportement de gestion sur l'élément de réseau.

11. Appareil de communication, configuré pour réaliser le procédé selon l'une quelconque des revendications 1 à 6, ou le procédé selon l'une quelconque des revendications 7 à 9, ou le procédé selon la revendication 10.

12. Support de stockage lisible par ordinateur, stockant des instructions, dans lequel lorsque les instructions sont mises en œuvre, un dispositif mettant en œuvre les instructions réalise le procédé selon l'une quelconque des revendications 1 à 6, ou le procédé selon l'une quelconque des revendications 7 à 9, ou le procédé selon la revendication 10.

13. Produit de programme informatique, dans lequel lorsque le produit de programme informatique est mis en œuvre sur un ordinateur, l'ordinateur est activé pour réaliser le procédé selon l'une quelconque des revendications 1 à 6 ou le procédé selon l'une quelconque des revendications 7 à 9, ou le procédé selon la revendication 10.

14. Système, comprenant un dispositif à fonction de gestion de décision (104) et un dispositif à fonction de gestion de tranche de réseau (102), dans lequel
le dispositif à fonction de gestion de décision (104) est configuré pour réaliser le procédé selon l'une quelconque des revendications 1 à 6 ; et le dispositif à fonction de gestion de tranche de réseau (102) est configuré pour réaliser le procédé selon l'une quelconque des revendications 7 à 9.

15. Système selon la revendication 14, comprenant également :
un dispositif à fonction de gestion de sous-réseau de tranche de réseau (103) configuré pour réaliser le procédé selon la revendication 10.
